# EUROPÄISCHE PATENTSCHRIFT

(11) **EP 3 847 416 B1**
(45) Veröffentlichungstag und Bekanntmachung des Hinweises auf die Patenterteilung: **30.10.2024**
(21) Anmeldenummer: 19765232.4
(22) Anmeldetag: 04.09.2019
(51) Int. Cl.: G01B 11/25, B23Q 7/04, B23Q 39/04, B23Q 7/00, B65G 37/00, B24B 9/14, G01M 11/02, B29D 11/00

(54) **VORRICHTUNG ZUR LINSENBEARBEITUNG**
APPARATUS FOR LENS PROCESSING
APPAREIL DE TRAITEMENT DE LENTILLE

(30) Priorität: 04.09.2018 DE 102018006980; 21.09.2018 DE 102018007463
(43) Veröffentlichungstag der Anmeldung: 14.07.2021
(73) Patentinhaber: Schneider GmbH & Co. KG, 35112 Fronhausen (DE)
(72) Erfinder: SCHNEIDER, Gunter, 35037 Marburg (DE); HOFMANN, Klaus, 61273 Wehrheim (DE); KRÄMER, Klaus, 35232 Dautphetal-Friedensdorf (DE); SCHNEIDER, Sebastian, 35037 Marburg (DE)
(74) Vertreter: Von Rohr Patentanwälte Partnerschaft mbB
(86) Internationale Anmeldenummer: PCT/EP2019/073599
(87) Internationale Veröffentlichungsnummer: WO 2020/049052

(56) Entgegenhaltungen:
- EP-A2- 2 636 484
- WO-A1-2016/095939
- WO-A1-2017/080639
- WO-A2-2013/131656
- CN-U- 203 509 833
- DE-A1- 102008 023 093
- DE-A1- 4 107 084
- JP-A- 2000 218 487
- KR-A- 20080 057 920
- US-A- 2 493 206

## Beschreibung

Die vorliegende Erfindung betrifft eine Vorrichtung zur Linsenbearbeitung, insbesondere Brillenglasbearbeitung, insbesondere gemäß dem Oberbegriff von Patentanspruch 1, eine Bearbeitungseinrichtung für Linsen, insbesondere Brillengläser, insbesondere gemäß dem Oberbegriff von Patentanspruch 19 oder 20, eine Messeinrichtung zur Vermessung von Linsen sowie ein Verfahren zur Linsenbearbeitung, insbesondere zur Brillenglasbearbeitung, insbesondere gemäß dem Oberbegriff von Patentanspruch 30 oder 31.

Eine gattungsgemäße Vorrichtung und ein gattungsgemäßes Verfahren sind aus der DE 41 27 094 A1 bekannt. Diese Druckschrift offenbart eine Bearbeitungsstation zur Randbearbeitung von Linsen mit einer Handhabungsvorrichtung in Form eines Greifarms, drei Randbearbeitungseinrichtungen sowie mindestens zwei Sensoren zur Vermessung und/oder Ausrichtung der zu bearbeitenden Linsen. Die Handhabungsvorrichtung entnimmt eine zu bearbeitenden Linse einem Vorratsbehälter und fördert diese Linse zunächst zu einer Vorrichtung zum Ausrichten der Linse und anschließend zu einer Randbearbeitungseinrichtung. Dieser Vorgang wird so lange wiederholt, bis alle Randbearbeitungseinrichtungen bestückt sind. Nach Abschluss der Randbearbeitung wird die fertig bearbeitete Linse aus der Randbearbeitungseinrichtung entnommen und wieder im Magazin abgelegt. Nachteilig hierbei ist die vergleichsweise lange Bearbeitungszeit der Linsen ausgehend von ihrer Vermessung bis zum Abschluss der Randbearbeitung.

Die WO 2001/070460 A1 offenbart eine Vorrichtung und ein Verfahren zur Vermessung und Randbearbeitung von Linsen, wobei die zu verarbeitenden Linsen auf zwei Bearbeitungseinheiten verteilt werden, welche aus je einer Messeinrichtung und einer Randbearbeitungseinrichtung bestehen.

Die US 2007/0264915 A1 beschreibt eine Vorrichtung zum Randbearbeiten von Brillengläsern, bei der eine mit einem Ladetisch gekoppelte Messvorrichtung und eine Randbearbeitungsvorrichtung für ein Brillenglas mittels eines Ladearms verknüpft sind.

Die WO 2013/131656 A2 offenbart eine Anlage zur Bearbeitung optischer Linsen.

Die Aufgabe der vorliegenden Erfindung besteht darin, eine Vorrichtung bereitzustellen, die jeweils eine flexibel handhabbare Vermessung und/oder Ausrichtung und/oder Bearbeitung, insbesondere Randbearbeitung von Linsen bei möglichst kurzer Bearbeitungszeit bzw. möglichst großem Durchsatz von Linsen ausgehend von der Entnahme der Linsen aus einer Transportkiste bis einschließlich der Ablage der fertig bearbeiteten Linsen in einer Transportkiste ermöglichen.

Die Lösung besteht in einer Vorrichtung mit den Merkmalen des Patentanspruchs 1.

Vorteilhafte Weiterbildungen sind Gegenstand der Unteransprüche.

Mindestens eine Messeinrichtung und mindestens eine Bearbeitungseinrichtung sind über mindestens eine Fördereinrichtung miteinander wirkverbunden.

Die Anordnung von Messeinrichtung(en), Bearbeitungseinrichtung(en) und Fördereinrichtungen) im Verhältnis zueinander ist erfindungsgemäß variabel ausführbar. Damit können erfindungsgemäß beliebig viele Messeinrichtungen mit beliebig vielen Bearbeitungseinrichtungen verknüpft werden. Bspw. kann eine einzelne Messeinrichtung mit zwei oder mehr Bearbeitungseinrichtungen verknüpft werden oder es können zwei oder mehr Messeinrichtungen mit einer einzelnen Bearbeitungseinrichtung verknüpft werden oder es können insbesondere zwei oder mehr Messeinrichtungen mit zwei oder mehr Bearbeitungseinrichtungen verknüpft werden.

Ferner sind Messeinrichtung(en), Fördereinrichtung(en) und/oder Bearbeitungseinrichtung(en) hinsichtlich ihrer technischen und/oder baulichen Ausgestaltung und/oder hinsichtlich ihrer Funktionsweise frei wählbar. Dies hat zur Folge, dass die erfindungsgemäße Vorrichtung an unterschiedlichste Anforderungen an die Vermessung und/oder Bearbeitung von Linsen angepasst werden kann (bspw. bezüglich Vermessungsdauer und/oder Bearbeitungsdauer und/oder Größe und/oder Form).

Im Ergebnis wird eine flexible Vermessung und Bearbeitung der Linsen bei möglichst kurzer Bearbeitungszeit und/oder möglichst geringem Zeitverlust, ausgehend von der Vermessung der Linsen bis zum Abschluss der Bearbeitung, erreicht.

Ein weiterer erfindungsgemäßer Aspekt besteht darin, dass mit der erfindungsgemäßen Vorrichtung ein besonders hoher Durchsatz an fertig bearbeiteten, insbesondere randbearbeiteten Linsen (bspw. Anzahl der fertig bearbeiteten Linsen pro Stunde) erzielt werden kann. Dies kann grundsätzlich entweder mittels der gewählten Anzahl an Messeinrichtung(en) und/oder Bearbeitungseinrichtung(en) oder aufgrund der gewählten technischen Ausgestaltung und/oder Funktionsweise oder aufgrund des gewählten Durchsatzes der Messeinrichtung(en) und/oder Bearbeitungseinrichtung(en) als solche oder mittels einer Kombination von zwei oder mehreren dieser Maßnahmen erreicht werden.

Der erfindungsgemäß modulare Aufbau der erfindungsgemäßen Vorrichtung bezieht sich also insbesondere auf die Anzahl der vorhandenen Messeinrichtungen und/oder Bearbeitungseinrichtungen, auf die Art und Weise ihrer Verknüpfung und/oder auf die Wahl der der konstruktiven Gestaltung und/oder die Funktionsweise der Messeinrichtungen und/oder Bearbeitungseinrichtungen.

Gemäß einem weitern Aspekt der nicht unter die Erfindung fällt, weist die Vorrichtung zwei Messeinrichtungen, zwei Bearbeitungseinrichtungen, zwei Fördereinrichtungen und eine Handhabungseinrichtung auf. Die Handhabungseinrichtung ist zwischen den Messeinrichtungen und den Fördereinrichtungen vorgesehen und weist eine Handhabungseinheit für den Transfer von Linsen von den Messeinrichtungen zu den Fördereinrichtungen auf, so dass es keine feste Zuordnung von einer Messeinrichtung genau zu einer Bearbeitungseinrichtung gibt.

Gemäß einem weiteren, auch unabhängig realisierbaren Aspekt betrifft die vorliegende Erfindung eine Vorrichtung zur Linsenbearbeitung, insbesondere Randbearbeitung von Linsen. Die Vorrichtung weist eine erste und eine zweite Messeinrichtung zum Vermessen von zu bearbeitenden Linsen und eine erste und eine zweite Bearbeitungseinrichtung zum Bearbeiten, insbesondere Randbearbeiten, der Linsen auf. Des Weiteren weist die Vorrichtung ein Gehäuse auf, welches die Messeinrichtungen und Bearbeitungseinrichtungen umgibt bzw. ein gemeinsames Gehäuse für die Messeinrichtungen und die Bearbeitungseinrichtungen bildet. Die Vorrichtung ist derart ausgebildet, dass die Linsen nach einer Messung in einer der Messeinrichtungen wahlweise der ersten oder der zweiten Bearbeitungseinrichtung bzw. einer der jeweiligen Bearbeitungseinrichtung zugeordneten Fördereinrichtung zuförderbar sind. Hierdurch werden ein flexibler Ablauf sowie ein hoher Durchlauf von Linsen ermöglicht.

Die Vorrichtung weist vorzugsweise eine Handhabungseinrichtung auf, die dazu ausgebildet ist, Linsen von beiden Messeinrichtungen zu entnehmen und wahlweise an eine der Bearbeitungseinrichtungen bzw. an eine der jeweiligen Bearbeitungseinrichtung zugeordnete Fördereinrichtung zur Förderung der Linsen zu der jeweiligen Bearbeitungseinrichtung zu übergeben. Dies ist einem hohen Durchsatz zuträglich.

Ein weiterer, auch unabhängig realisierbarer Aspekt der nicht beansprucht wird, betrifft eine Bearbeitungseinrichtung zur Randbearbeitung von Linsen mit einem Grobbearbeitungsbereich und einem Feinbearbeitungsbereich. In der Bearbeitungseinrichtung sind zwei einstückige Spindelgehäuse vorgesehen, die versetzt zueinander auf einer Dreheinrichtung derart angeordnet sind, dass sie um eine Drehachse um 180° drehbar sind, so dass jedes einstückige Spindelgehäuse vom Grobbearbeitungsbereich in den Feinbearbeitungsbereich und zurück transferierbar angeordnet ist. Dies ist einem hohen Durchsatz zuträglich.

Ein weiterer, auch unabhängig realisierbarer Aspekt der nicht beansprucht wird, betrifft eine Bearbeitungseinrichtung zur Bearbeitung, insbesondere Randbearbeitung, von Linsen. Die Bearbeitungseinrichtung weist einen Grobbearbeitungsbereich und einen Feinbearbeitungsbereich auf und ist zur gleichzeitigen Bearbeitung von Linsen im Grobbearbeitungsbereich und Feinbearbeitungsbereich ausgebildet. Weiter weist die Bearbeitungseinrichtung eine Spindeleinrichtung mit zwei Werkstückspindeln auf, wobei die Werkstückspindeln jeweils zum Halten einer Linse während einer Bearbeitung ausgebildet sind. Die Spindeleinrichtung mit den Werkstückspindeln ist drehbar, so dass die Werkstückspindeln vom Grobbearbeitungsbereich in den Feinbearbeitungsbereich und umgekehrt bewegbar sind. Dies ist einem hohen Durchsatz zuträglich.

Die Werkstückspindeln sind vorzugsweise in einem festen Abstand voneinander angeordnet, insbesondere so dass bei einer Drehung der Spindeleinrichtung um 180° die Werkstückspindeln ihre Positionen tauschen.

Die Spindeleinrichtung ist vorzugsweise zum Wechseln der Werkstückspindeln zwischen dem Grobbearbeitungsbereich und dem Feinbearbeitungsbereich um eine vorzugsweise vertikale Drehachse und/oder mittels einer Dreheinrichtung drehbar, insbesondere um 180°.

Vorzugsweise weist der Grobbearbeitungsbereich genau eine Werkzeugspindel auf und/oder weist der Feinbearbeitungsbereich mehrere, insbesondere fünf, Werkzeugspindeln auf.

Ein nicht beanspruchtes Verfahren zeichnet sich dadurch aus, dass die zu bearbeitenden Linsen in beliebiger Reihenfolge aus den Transportbehältern entnommen werden, dass die Linsen einer beliebigen Messeinrichtung zugeführt werden und/oder dass die Linsen einer beliebigen Bearbeitungseinrichtung zugeführt werden.

Insbesondere können die zu bearbeitenden Linsen in beliebiger Reihenfolge zu einer frei wählbaren Messeinrichtung und anschließend mittels einer frei wählbaren Fördereinrichtung zu einer Bearbeitungseinrichtung und wieder zurück transportiert werden. Dies erlaubt eine besonders flexible Vermessung und Randbearbeitung der Linsen, da immer diejenige Messeinrichtung und/oder Fördereinrichtung bzw. Bearbeitungseinrichtung gewählt werden kann, die für eine Messung bzw. Randbearbeitung der betreffenden Linse zur Verfügung steht.

Ein weiterer, auch unabhängig realisierbarer der nicht beansprucht wird, betrifft ein Verfahren zur Bearbeitung, insbesondere Randbearbeitung, von Linsen in einer Bearbeitungseinrichtung mit einem Grobbearbeitungsbereich und einem Feinbearbeitungsbereich. Die Bearbeitungseinrichtung weist eine Spindeleinrichtung mit zwei, vorzugsweise in einem festen Abstand voneinander angeordneten, Werkstückspindeln auf. Dabei hält eine Werkstückspindel eine Linse während einer Bearbeitung im Feinbearbeitungsbereich, wobei gleichzeitig die andere Werkstückspindel eine zweite Linse im Grobbearbeitungsbereich hält. Nach der Bearbeitung im Feinbearbeitungsbereich wird die Spindeleinrichtung gedreht, insbesondere um 180°, so dass die im Feinbearbeitungsbereich befindliche Werkstückspindel in dem Grobbearbeitungsbereich umgeschwenkt wird und die im Grobbearbeitungsbereich befindliche Linse in den Feinbearbeitungsbereich geschwenkt wird. Dies ist einem hohen Durchsatz zuträglich.

Vorzugsweise wird während der Bearbeitung einer Linse im Feinbearbeitungsbereich eine Linse in die im Grobbearbeitungsbereich befindliche Werkstückspindel geladen, von der im Grobbearbeitungsbereich befindlichen Werkstückspindel entladen und/oder im Grobbearbeitungsbereich bearbeitet. Dies ist einem hohen Durchsatz zuträglich.

Weiter ist es bevorzugt, dass, insbesondere während einer Bearbeitung einer Linse im Feinbearbeitungsbereich, eine Fördereinrichtung eine fertig bearbeitete Linse der Werkstückspindel im Grobbearbeitungsbereich entnimmt und anschließend eine zu bearbeitende Linse an diese Werkstückspindel übergibt. Dies ist einem hohen Durchsatz zuträglich.

Dabei ist es bevorzugt, dass die Fördereinrichtung eine fertig bearbeitete Linse von der Werkstückspindel mittels eines zweiten Greifers oder Saugers übernimmt, wobei anschließend der zweite Greifer oder Sauger weggeschwenkt wird und eine zu bearbeitende Linse mittels eines ersten Greifers oder Saugers unter Beibehaltung ihrer Ausrichtung an die Werkstückspindel übergeben wird.

Die ertindungsgemäße Vorrichtung ist insbesondere dann von Vorteil, wenn eine Linse mit einer überdurchschnittlich langen Bearbeitungszeit in die erfindungsgemäße Vorrichtung einläuft, bspw. weil ihre Vermessung und/oder ihre Bearbeitung aufgrund besonderer Umstände (wie bspw. außergewöhnliche optische Eigenschaften in Bezug auf das Vermessen, zahlreiche und/oder komplexe Bearbeitungsschritte, bspw. bedingt durch eine komplexe erwünschte Randform) überdurchschnittlich aufwändig ist. Mit der erfindungsgemäßen Vorrichtung ist es bspw. moglich, eine derartige Linse zu einem Zeitpunkt ihrer Vermessung und Bearbeitung zuzuführen, zu dem die Wartezeit für die nachfolgenden zu bearbeitenden Linsen minimiert werden kann.

Mit anderen Worten: Eine zu bearbeitende Linse mit kürzerer Bearbeitungszeit kann eine andere zu bearbeitende Linse mit längerer Bearbeitungszeit "überholen", insbesondere mittels entsprechender Steuerung der mindestens einen Handhabungseinrichtung bzw. -vorrichtung und/oder der mindestens einen Fördereinrichtung. Es kann also vermieden werden, dass eine derartige Linse die Arbeitsgeschwindigkeit der gesamten Vorrichtung bestimmt.

Dank der Entkoppelung von Messen und Bearbeiten und der Möglichkeit, die Reihenfolge frei zu wählen, in der die Linsen ihrer Vermessung und Bearbeitung zugeführt werden, kann eine zeitaufwändige Vermessung und/oder Bearbeitung einer Linse durchgeführt werden, ohne die Vermessung und/oder Bearbeitung nachfolgender Linsen über Gebühr zu verzögern.

Die erfindungsgemäße Vorrichtung und das erfindungsgemäße Verfahren eignen sich insbesondere zur Randbearbeitung von Brillengläsern.

Eine Randbearbeitung einer Linse ist insbesondere eine Bearbeitung (ausschließlich) des Randes der Linse zur Anpassung der Linse an ein Brillengestell. Insbesondere wird bei der Randbearbeitung (ausschließlich) die geometrische Form des Randes geändert bzw. an ein Brillengestell angepasst.

Die nicht beanspruchte Bearbeitungseinrichtung weist vorzugsweise einen Grobbearbeitungsbereich und ferner einen Feinbearbeitungsbereich auf. Besonders bevorzugt ist der Grobbearbeitungsbereich in einem Ladebereich der Bearbeitungseinrichtung angeordnet. Die erfindungsgemäße Bearbeitungseinrichtung erlaubt die Randbearbeitung von zwei Linsen zur gleichen Zeit und/oder in zeitüberlappender Weise, nämlich die Grobbearbeitung einer ersten Linse und die Feinbearbeitung einer zweiten Linse. Dadurch wird eine erhebliche Zeitersparnis bei der Randbearbeitung von Linsen erzielt.

Vorteilhafte Weiterbildungen ergeben sich aus den Unteransprüchen.

Vorteilhafterweise sind mindestens zwei Bearbeitungseinrichtungen und/oder mindestens zwei Messeinrichtungen vorgesehen. Die Anzahl der bearbeitbaren Linsen pro Stunde ist umso größer, je größer die Anzahl der Bearbeitungseinrichtungen und Messeinrichtungen gewählt wird. In der Praxis hat sich eine Kombination aus zwei Messeinrichtungen und zwei bis vier Bearbeitungseinrichtungen als besonders gut geeignet erwiesen.

Zweckmäßigerweise sind baugleiche Messeinrichtungen und/oder baugleiche Bearbeitungseinrichtungen vorgesehen, so dass jede Linse mit übereinstimmenden Verfahren vermessen und/oder bearbeitet werden kann. Je nach den Umständen des Einzelfalls kann es aber auch von Vorteil sein, Messeinrichtungen und/oder Bearbeitungseinrichtungen unterschiedlicher Bauart zur Durchführung voneinander verschiedener Messverfahren bzw. Bearbeitungsverfahren vorzusehen.

Die mindestens eine Messeinrichtung kann in vorteilhafter Weise zur berührungslosen Vermessung mittels Deflektometrie, Transmissionsstrahlung und/oder Lumineszenzstrahlung ausgebildet sein. Somit können Linsen mit unterschiedlichen optischen Eigenschaften möglichst rasch vermessen werden. Die mindestens eine Messeinrichtung kann selbstverständlich auch in an sich bekannter Weise bspw. mit Messtastern zur taktilen Vermessung ausgestattet sein.

Besonders bevorzugt weist die Handhabungseinrichtung bzw. -vorrichtung eine erste Handhabungseinheit für den Transfer der Linsen aus mindestens einer Transportkiste in die mindestens eine Messeinrichtung und/oder von der mindestens einen Fördereinrichtung in die mindestens ein Transportkiste sowie vorzugsweise eine zweite Handhabungseinheit für den Transfer der Linsen von der mindestens einen Messeinrichtung zu der mindestens einen Fördereinrichtung auf. Auf diese Weise kann insbesondere die Entkopplung der mindestens einen Messeinrichtung von zwei oder mehreren Bearbeitungseinrichtungen, d. h. die freie Wahl der Bearbeitungseinrichtung nach erfolgter Vermessung der zu bearbeitenden Linse, besonders einfach verwirklicht werden.

Vorteilhafterweise bildet die mindestens eine Aufnahmeeinrichtung einen Pufferbereich für die zu bearbeitenden Linsen bzw. deren Transportkisten. Diese Maßnahme ermöglicht auf besonders einfache Weise die freie Wahl der Bearbeitungsreihenfolge der zu bearbeitenden Linsen. Insbesondere kann die Puffereinrichtung mindestens zwei, bevorzugt mindestens drei Transportbänder aufweisen, die zweckmäßigerweise parallel zueinander verlaufend angeordnet sind. Im letzteren dient das mittlere Band zum Zirkulieren von Transportkisten, die jeweils von den äußeren Transportbändern auf das mittlere Band und zurück auf die äußeren Transportbänder geleitet werden können.

Die erfindungsgemäße Vorrichtung weist zweckmäßigerweise mindestens einen Messbereich für die mindestens eine Messeinrichtung und mindestens einen Bearbeitungsbereich für die mindestens eine Bearbeitungseinrichtung auf. Somit können Messbereich(e) und Bearbeitungsbereich(e) auf einfache Weise räumlich voneinander getrennt werden.

Der Aufnahmebereich bzw. die Aufnahmeeinrichtung kann vorteilhafterweise in einem Messbereich vorgesehen sein, um einen einfachen Transport der Linsen in die dann in räumlicher Nähe vorgesehene mindestens eine Messeinrichtung zu gewährleisten.

Die mindestens eine Fördereinrichtung erstreckt sich vorteilhafterweise über den mindestens einen Messbereich und den mindestens einen Bearbeitungsbereich, um die räumliche Trennung zwischen dem mindestens einen Messbereich und dem mindestens einen Bearbeitungsbereich zu überbrücken.

Der mindestens ein Messbereich und der mindestens eine Bearbeitungsbereich können auch durch eine Trennwand voneinander abgegrenzt sein. In diesem Fall kann die mindestens eine Fördereinrichtung vorteilhafterweise durch mindestens eine in der Trennwand vorgesehene Öffnung hindurchtreten.

Das nicht beanspruchte Verfahren ist bevorzugt derart ausgestaltet, dass die jeweilige Messeinrichtung und/oder die jeweilige Bearbeitungseinrichtung abhängig von Mess- und/oder Bearbeitungsaufwand der jeweils zu bearbeitenden Linse und/oder abhängig von freien Kapazitäten an Messeinrichtung und/oder Bearbeitungseinrichtung ausgewählt werden können. Insbesondere kann gewählt werden, ob eine oder mehrere Messeinrichtungen bzw. eine oder mehrere Bearbeitungseinrichtungen gewählt werden und/oder ob baugleiche oder bauverschiedene Messeinrichtungen bzw. baugleiche und/oder bauverschiedene Bearbeitungseinrichtungen zur Durchführung des erfindungsgemäßen Verfahrens verwendet werden. Damit ist eine schnelle und flexible Vermessung und Bearbeitung der Linsen möglich. Totzeiten an der mindestens einen Messeinrichtung bzw. an der mindestens einen Bearbeitungseinrichtung können minimiert werden. Linsen mit überdurchschnittlich langen Vermessungs- und/oder Bearbeitungszeiten können derart zur Vermessung und Bearbeitung ausgewählt werden, dass die Wartezeiten für nachfolgende Linsen mit bspw. kürzeren Vermessungs- und/oder Bearbeitungszeiten minimiert oder sogar ganz vermieden werden können.

Eine vorteilhafte Weiterbildung des nicht beanspruchten Verfahrens besteht darin, dass mindestens zwei Linsen zeitgleich vermessen und/oder zeitgleich bearbeitet werden können. Besonders bevorzugt ist die zeitgleiche Bearbeitung von mindestens vier Linsen, da die Bearbeitung der Linsen in der Regel länger dauert als die Vermessung der Linsen.

Die erfindungsgemäße Bearbeitungseinrichtung weist bevorzugt zwei, insbesondere in je einem Spindelgehäuse angeordnete, Werkstückspindeln auf, vorzugsweise wobei die beiden Spindelgehäuse zueinander verschwenkbar ausgebildet sind, insbesondere derart, dass sie wechselweise in den Grobbearbeitungsbereich und den Feinbearbeitungsbereich der erfindungsgemäßen Vorrichtung schwenkbar sind. Die zu bearbeitende Linse kann somit auf besonders einfache Weise unterschiedlichen Bearbeitungsschritten mit verschiedenen, frei wählbaren Werkzeugen zugeführt werden.

Wenn die beiden Spindelgehäuse versetzt zueinander angeordnet sind, verringert sich in vorteilhafter Weise der "Flugkreis", also der für die Bewegung der beiden Gehäuse freizuhaltende Radius.

Ausführungsbeispiele der vorliegenden Erfindung werden im Folgenden anhand der beigefügten Zeichnungen näher beschrieben. Es zeigen in schematischer, nicht maßstabsgetreuer Darstellung:
- Fig. 1: eine perspektivische Ansicht eines ersten Ausführungsbeispiels des grundsätzlichen Aufbaus der erfindungsgemäßen Vorrichtung;
- Fig. 2: eine Draufsicht auf ein zweites Ausführungsbeispiel der erfindungsgemäßen Vorrichtung;
- Fig. 3: eine Draufsicht auf ein drittes Ausführungsbeispiel der erfindungsgemäßen Vorrichtung;
- Fig. 4: eine Draufsicht auf ein viertes Ausführungsbeispiel der erfindungsgemäßen Vorrichtung;
- Fig. 5: eine Draufsicht auf ein fünftes Ausführungsbeispiel der erfindungsgemäßen Vorrichtung;
- Fig. 6a: eine Draufsicht auf ein Ausführungsbeispiel einer Handhabungseinrichtung bzw. -vorrichtung für die erfindungsgemäße Vorrichtung;
- Fig. 6b: die Handhabungseinrichtung bzw. -vorrichtung gemäß Fig. 6a in einer Seitenansicht;
- Fig. 7: eine schematische Darstellung eines Ausführungsbeispiels einer erfindungsgemäß verwendeten Messeinrichtung;
- Fig. 8: eine perspektivische Darstellung des Ausführungsbeispiels der erfindungsgemäß verwendeten Messeinrichtung gemäß Fig. 7 in einer Beladeposition;
- Fig. 9: eine perspektivische Darstellung des Ausführungsbeispiels der erfindungsgemäß verwendeten Messeinrichtung gemäß Fig. 7 in einer Messposition;
- Fig. 10: ein weiteres Ausführungsbeispiel eines Teilbereichs der erfindungsgemäßen Messeinrichtung gemäß Fig. 7;
- Fig. 11: ein Blockschema eines Ausführungsbeispiels des mit der erfindungsgemäß verwendeten Messeinrichtung gemäß Fig. 7 verwendbaren Verfahrens.
- Fig. 12: die Handhabungseinrichtung bzw. -vorrichtung gemäß der Fig. 6a, 6b mit Ausführungsbeispielen von Fördereinrichtungen für die erfindungsgemäße Vorrichtung;
- Fig. 13: die Fördereinrichtungen gemäß Fig. 12 mit Ausführungsbeispielen einer erfindungsgemäßen Bearbeitungseinrichtung für die erfindungsgemäße Vorrichtung;
- Fig. 14a: ein Ausführungsbeispiel einer erfindungsgemäßen Bearbeitungseinrichtung für die erfindungsgemäße Vorrichtung in einer ersten perspektivischen Darstellung;
- Fig. 14b: die Bearbeitungseinrichtung gemäß Fig. 14a in einer weiteren perspektivischen Darstellung;
- Fig. 15: eine beispielhafte Zeittafel für ein Ausführungsbeispiel des nicht beanspruchten Verfahrens.

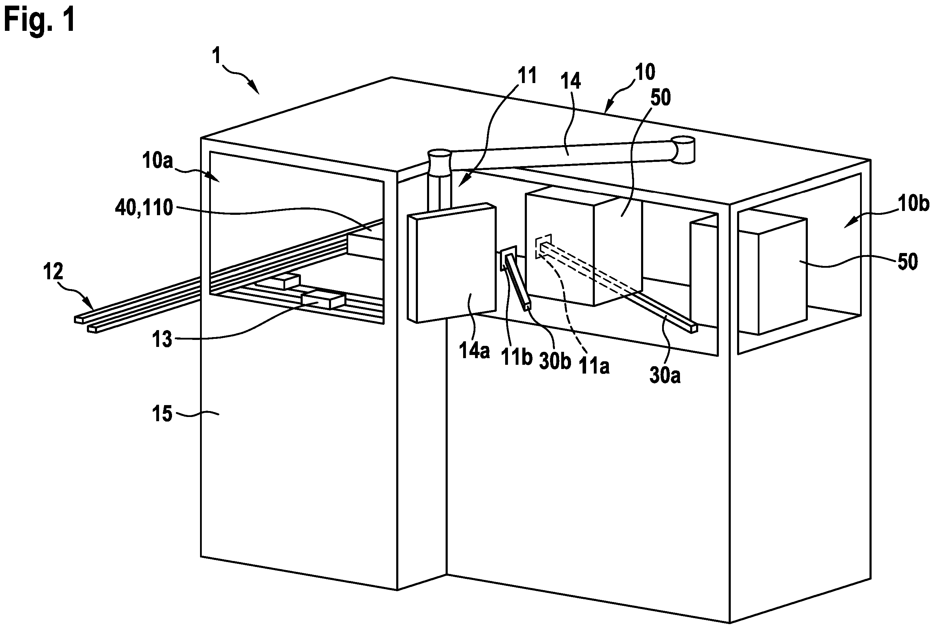

Die Fig. 1 bis 5 zeigen verschiedene Ausführungsformen der erfindungsgemäßen Vorrichtung, wobei gleiche oder vergleichbare Bauteile mit denselben Bezugszeichen versehen sind.

Fig. 1 zeigt beispielhaft den grundsätzlichen Aufbau eines ersten Ausführungsbeispiels der erfindungsgemäßen Vorrichtung 1 zur Linsenbearbeitung. Die erfindungsgemäße Vorrichtung 1 dient im Ausführungsbeispiel zum Vermessen und spanabhebenden Randbearbeiten von zu bearbeitenden Linsen, insbesondere derart, dass gemäß vorgegebener Fertigungsdaten und/oder Gestelldaten fertig randbearbeitete Linsen insbesondere zur Aufnahme in Brillenfassungen (nicht dargestellt) resultieren.

Die erfindungsgemäße Vorrichtung 1 weist vorzugsweise ein Gehäuse 10 auf, welches bevorzugt im Wesentlichen in einen Messbereich 10a und einen Bearbeitungsbereich 10b unterteilt ist.

Das Gehäuse 10 dient insbesondere dem Arbeitsschutz, bspw. bzgl. Werkzeug- oder Spindelbruch, Schallschutz und Schutz vor Spanabfällen.

Es kann einteilig oder mehrteilig ausgebildet sein, insbesondere in einen Gehäuseteil für den Messbereich 10a und einen Gehäuseteil für den Bearbeitungsbereich 10b unterteilt sein (nicht dargestellt). Dementsprechend kann die erfindungsgemä-βe Vorrichtung 1 auf einem einzigen Grundgestell oder auf einem mehrteiligen Grundgestell, insbesondere einem Grundgestellteil für den Messbereich 10a und einem Grundgestellteil für den Bearbeitungsbereich 10b, aufgebaut sein (nicht dargestellt).

Im Messbereich 10a ist mindestens eine Messeinrichtung 40, 110 zum Vermessen und/oder Ausrichten der zu bearbeitenden Linsen vorgesehen, während im Bearbeitungsbereich 10b mindestens eine Bearbeitungseinrichtung 50 zum insbesondere spanabhebenden Randbearbeiten der Linsen angeordnet ist.

Der Messbereich 10a und der Bearbeitungsbereich 10b der erfindungsgemäßen Vorrichtung 1 sind vorzugsweise durch eine Trennwand 11 voneinander abgegrenzt. Die Trennwand 11 soll die Verunreinigung des Messbereichs 10a mit den bei der spanabhebenden Bearbeitung der Linsen anfallenden Spanabfällen zumindest auf ein Minimum reduzieren.

Bevorzugt tritt mindestens eine Fördereinrichtung 30a, 30b durch jeweils eine Öffnung 11a, 11b in der Trennwand 11 hindurch. Die Öffnungen 11a, 11b sind vorzugsweise mit Türen versehen (nicht dargestellt), die die Öffnungen 11a, 11b vor dem Durchtritt einer von einer Fördereinrichtung 30a, 30b transportierten Linse freigeben und nach dem Durchtritt wieder verschließen.

Die mindestens eine Fördereinrichtung 30a, 30b dient zum Transport der zu bearbeitenden Linsen von der mindestens einen Messeinrichtung 40, 110, d. h. aus dem Messbereich 10a hinaus, zur mindestens einen Bearbeitungseinrichtung 50 sowie zum Transport der fertig bearbeiteten Linsen von der mindestens einen Bearbeitungseinrichtung 50 zurück in den Messbereich 10a der erfindungsgemäßen Vorrichtung 1.

Vorzugsweise ist ein externes Förderband 12 benachbart zum Messbereich 10a am Gehäuse 10 angeordnet, welches zur Zuführung der zu bearbeitenden Linsen zu der erfindungsgemäßen Vorrichtung 1 bzw. zum Abtransport der fertig randbearbeiteten Linsen weg von der erfindungsgemäßen Vorrichtung 1 dient.

Die Linsen sind bevorzugt in Transportkisten 13 aufgenommen.

Das externe Förderband 12 kann bevorzugt Teil eines größeren und/oder komplexeren Fördersystems, insbesondere eines linearen oder ringförmigen Fördersystems, zum Transport von Linsenrohlingen sowie teilweise und fertig bearbeiteten Linsen von und zu verschiedenen Bearbeitungseinrichtungen bilden (nicht dargestellt). Anstelle des externen Förderbands 12 sind aber auch andere Transporteinrichtungen für die Linsen denkbar.

Am Gehäuse 10 ist ferner vorzugsweise eine an einem Schwenkarm 14 befestigte Bedieneinheit 14a angeordnet. Die Bedieneinheit 14a weist vorzugsweise eine Anzeigeeinrichtung, insbesondere zur Anzeige von Steuermenüs und/oder Bearbeitungsstati der Linsen und eine Eingabeeinrichtung, insbesondere zur vorzugsweise zentralen Eingabe von Steuerbefehlen und/oder Anzeigeanforderungen auf. Mittels der Bedieneinheit 14a können die mindestens eine Fördereinrichtung 30, die mindestens eine Messeinrichtung 40, 110 und die mindestens eine Bearbeitungseinrichtung 50 von einer Bedienperson überwacht und/oder mittels Dateneingabe gesteuert werden. Ferner können die Bearbeitungsstati der Linsen überwacht werden.

Der Schwenkarm 14 dient zum Verschwenken der Bedieneinheit 14a in beliebiger Richtung auf eine beliebige Seite des Gehäuses 10 der erfindungsgemäßen Vorrichtung 1. In Abhängigkeit vom Standort der Bedieneinheit 14a in Bezug auf das Gehäuse 10 bzw. auf die mindestens eine Messeinrichtung 40 und/oder die mindestens eine Bearbeitungseinrichtung 50 kann die Bedieneinheit 14a so ausgebildet sein, unterschiedliche Anzeige- und/oder Steuermenüs, bspw. für die mindestens eine Messeinrichtung 40 und/oder die mindestens eine Bearbeitungseinrichtung 50, anzuzeigen.

Die Bedienung der erfindungsgemäßen Vorrichtung 1 kann selbstverständlich auch mittels anders aufgebauter bzw. ausgelegter Bedieneinrichtungen verwirklicht werden, insbesondere mittels drahtloser Bedieneinrichtungen wie Tablets, Laptops etc., die vorzugsweise ebenfalls in Abhängigkeit von ihrem Standort in Bezug auf das Gehäuse 10 bzw. auf die mindestens eine Messeinrichtung 40 und/oder die mindestens eine Bearbeitungseinrichtung 50 unterschiedliche Anzeige- und/oder Steuermenüs, bspw. für die mindestens eine Messeinrichtung 40 und/oder die mindestens eine Bearbeitungseinrichtung 50, anzeigen können.

Ein Schaltschrank 15 nimmt in an sich bekannter Weise die für die Energieversorgung, Bedienung und Steuerung der erfindungsgemäßen Vorrichtung 1 notwendigen Bauteile auf.

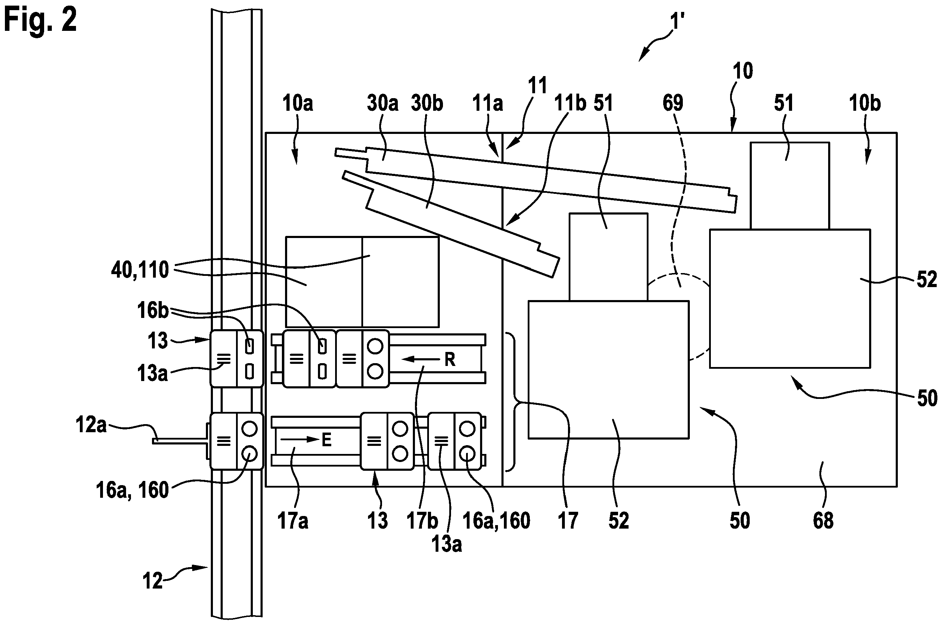

Fig. 2 zeigt in einer Draufsicht ein zweites Ausführungsbeispiel der erfindungsgemäßen Vorrichtung 1'. Das Gehäuse 10 und die Trennwand 11 zwischen Messbereich 10a und Bearbeitungsbereich 10b sind aus Gründen der Übersichtlichkeit nur angedeutet dargestellt.

Das externe Förderband 12 dient zur Förderung von Transportkisten 13 mit zu bearbeitenden Linsen 16a, 160 zum Hintransport zu der erfindungsgemäßen Vorrichtung 1' als auch zur Förderung von Transportkisten 13 mit fertig bearbeiteten Linsen 16b zum Wegtransport von der erfindungsgemäßen Vorrichtung 1'.

Die Transportkisten 13 sind mit Datenträgern 13a, bspw. Barcodes, RFID-Chips o. ä., versehen. Die Datenträger 13a können selbst Fertigungs- und/oder Gestelldaten für die ihnen zugeordneten, zu bearbeitenden Linsen 16a, 160 beinhalten. Die Datenträger 13a können aber auch bspw. lediglich Identifizierungsdaten für die ihnen zugeordneten Linsen 16a, 160 beinhalten, beispielsweise Auftragsnummern oder dergleichen. In diesem Fall sind die Fertigungs- und Gestelldaten bspw. in einer Steuereinheit oder einen Control Center (siehe dazu unten) gespeichert und mit den jeweiligen ihnen zugeordneten Identifizierungsdaten verknüpft.

Das Förderband 12 steht vorzugsweise in Wirkverbindung mit zwei im Messbereich 10a der erfindungsgemäßen Vorrichtung angeordneten Pufferbändern 17a, 17b, die einen Pufferbereich 17 bilden. Die Pufferbänder 17a, 17b können bspw. als Rollenbahn oder als Förderband ausgebildet sein und bieten im Ausführungsbeispiel Platz für bis zu acht Transportkisten 13.

Das Pufferband 17a transportiert die Transportkisten 13 vorzugsweise vom Förderband 12 weg und in Richtung des Pfeiles E in den Messbereich 10a hinein, während das Pufferband 17b die Transportkisten 13 in Richtung des Pfeiles R aus dem Messbereich 10a hinaus in Richtung des Förderbands 12 transportiert.

Die Transportkisten 13 werden in an sich bekannter Weise, bspw. mittels eines Schiebers 12a, vom Förderband 12 auf das Pufferband 17a geschoben. Der Vorschub der Transportkisten 13 auf den Pufferbändern 17a, 17b erfolgt ebenfalls in an sich bekannter Weise bspw. mittels Stoppvorrichtungen 18 (vgl. Fig.en 6a, 6b).

Die Stoppvorrichtungen 18 können bspw. ebenfalls als Schieber ausgebildet sein, die in an sich bekannter Weise quer zur Transportrichtung der Transportkisten 13 (i.e. quer zu den Pfeilen E bzw. R) bewegbar sind.

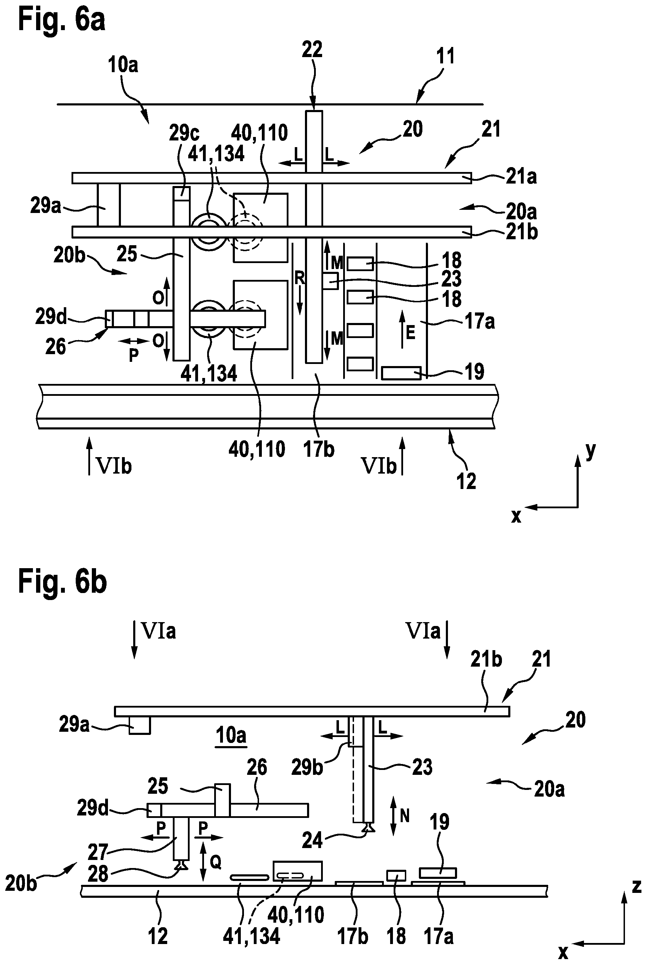

Am Übergang zwischen dem Förderband 12 und dem Pufferband 17a ist vorzugsweise ein Lesegerät 19, bspw. ein Laserscanner, vorgesehen (vgl. Fig. 6a, 6b), welches die auf den Datenträgern 13a gespeicherten Fertigungsdaten und/oder Gestelldaten für die darin befindlichen zu bearbeitenden Linsen 16a, 160 ausliest und der Steuerung der erfindungsgemäßen Vorrichtung 1' übermittelt.

Am Ende des Pufferbands 17a kann ebenfalls ein Schieber vorgesehen sein (nicht dargestellt), um die Transportkisten 13 in an sich bekannter Weise quer zur Transportrichtung der Transportkisten 13 (i.e. quer zu den Pfeilen E bzw. R) vom Pufferband 17a auf das Pufferband 17b zu schieben.

Der Pufferbereich 17 bzw. die Pufferbänder 17a, 17b dienen vorzugsweise als Pufferspeicher für die Transportkisten 13.

Dies ist insbesondere deswegen zweckmäßig, weil die zu bearbeitenden Linsen 16a, 160 ihrer Vermessung und Bearbeitung nicht zwingend in derselben Reihenfolge zugeführt werden, in welcher sie auf dem Pufferband 17a einlaufen. Vielmehr können später einlaufende zu bearbeitenden Linsen 16a, 160 zuerst vermessen und bearbeitet werden, während früher einlaufende zu bearbeitende Linsen 16a, 160 in ihren Transportkisten 13 entlang der Pfeile E und/oder R weitergefördert werden, bis sie von der Steuerung der erfindungsgemäßen Vorrichtung 1' zur Vermessung und Bearbeitung ausgewählt werden. Später einlaufende Linsen 16a, 160 können also bereits im Pufferbereich 17 befindliche Linsen 16a, 160 in Bezug auf die Reihenfolge ihrer Vermessung und Bearbeitung sozusagen "überholen". Dies hat bspw. den Vorteil, dass Linsen 16a, 160 mit überdurchschnittlich langer Vermessungs- und/oder Bearbeitungszeit, bspw. komplex zu vermessende und/oder zu bearbeitende Linsen, erst dann zum Vermessen und Bearbeiten ausgewählt werden, wenn sie den Gesamtablauf der Linsenvermessung und Linsenbearbeitung innerhalb der erfindungsgemäßen Vorrichtung 1' in möglichst geringem Maße verlangsamen.

Im Ergebnis können nachfolgende Linsen 16a, 160 nach einer möglichst kurzen "Wartezeit" zu einer freien Messeinrichtung 40, 110 und/oder zu einer freien Bearbeitungseinrichtung 50 gefördert und damit ihrer Vermessung und Bearbeitung zugeführt werden. Zugleich werden "Totzeiten" an der mindestens einen Messeinrichtung 40, 110 und der mindestens einen Bearbeitungseinrichtung 50 (d. h. Wartezeiten ohne Linsenbearbeitung) größtmöglich reduziert und im optimalen Fall vollständig vermieden.

Zur Unterstützung der Pufferwirkung ist es auch denkbar, zwischen den beiden Pufferbändern 17a, 17b ein drittes Transportband (nicht dargestellt) vorzusehen, welches parallel zu den Pufferbändern 17a, 17b verlaufend angeordnet und grundsätzlich bspw. aus der WO 2013/131656 A2 bekannt ist. Ein derartiges drittes Transportband ermöglicht es bspw., Transportkisten 13 vorzugsweise vom Pufferband 17b auf das dritte Transportband insbesondere mittels eines an sich bekannten Schiebers (nicht dargestellt) zu schieben, falls die in den Transportkisten 13 aufgenommenen Linsen 16a, 160 noch nicht zur Vermessung bzw. Bearbeitung vorgesehen sind. In diesem Fall würde das dritte Transportband wie das Pufferband 17a die Transportkisten 13 in Richtung des Pfeils E transportieren. Die Transportkisten 13 würden dann im Ergebnis auf dem dritten Transportband und dem Pufferband 17b zirkulieren. Eine derartige Zirkulation der Transportkisten 13 ist natürlich auf dem dritten Transport und dem Pufferband 17a denkbar. In diesem Fall würde das dritte Transportband die Transportkisten 13 in Richtung des Pfeils R transportieren.

Im Messbereich 10a sind im Ausführungsbeispiel zwei Messeinrichtungen 40, 110 vorgesehen, die vorzugsweise baugleich sind. Jede der Messeinrichtungen 40, 110 kann eine zu bearbeitende Linse 16a, 160 vermessen, insbesondere so dass die vermessenen, zu bearbeitenden Linsen 16a in an sich bekannter Weise der mindestens einen Bearbeitungseinrichtung 50 in korrekter räumlicher Orientierung übergeben werden können, um fertig randbearbeitete Linsen 16b entsprechend ihrer jeweiligen Fertigungsdaten und/oder Gestelldaten zu erhalten.

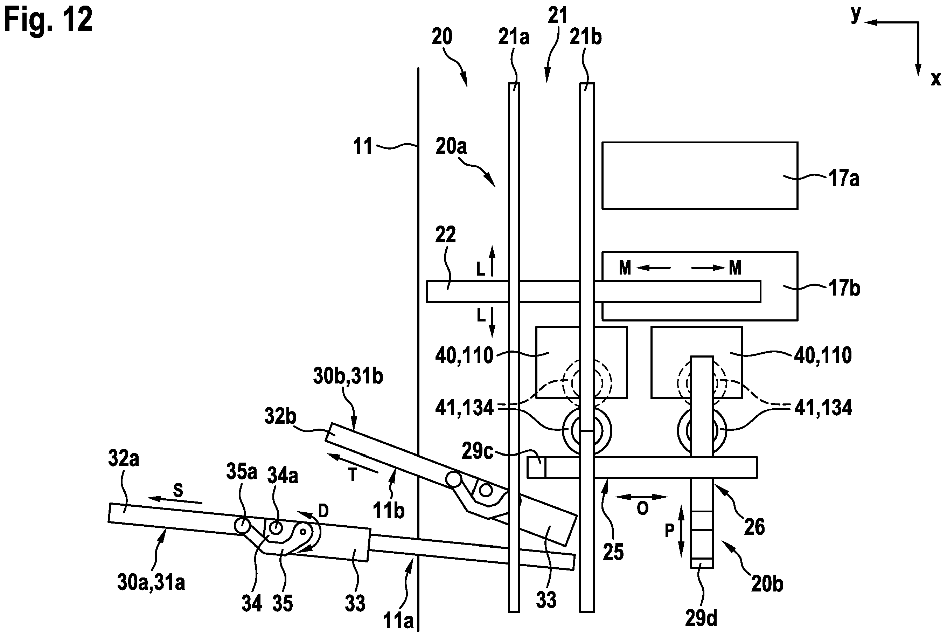

Die beiden Messeinrichtungen 40, 110 stehen im Ausführungsbeispiel in Verbindung mit zwei Fördereinrichtungen 30a, 30b. Die Übergabe der zu bearbeitenden Linsen 16a, 160 aus ihren Transportkisten 13 in eine frei wählbare Messeinrichtung 40, 110 von der Messeinrichtung 40 auf eine frei wählbare Fördereinrichtung 30a, 30b sowie die Übergabe der fertig randbearbeiteten Linsen 16b von den Fördereinrichtungen 30a, 30b zurück in ihre Transportkisten 13 erfolgt über eine Handhabungseinrichtung bzw. -vorrichtung 20, wie sie beispielhaft in den Fig. 6a, 6b und 12 dargestellt ist (siehe dazu unten).

Die Fördereinrichtungen 30a, 30b transportieren die vermessenen und ausgerichteten zu bearbeitenden Linsen 16a, vorzugsweise unter Beibehaltung ihrer räumlichen Orientierung, vom Messbereich 10a in den Bearbeitungsbereich 10b der erfindungsgemäßen Vorrichtung 1'.

Wie auch aus dem Ausführungsbeispiel gemäß Fig. 1 ersichtlich ist, treten die Fördereinrichtungen 30a, 30b vorzugsweise durch Öffnungen 11a, 11b in der Trennwand 11 zwischen dem Messbereich 10a und dem Bearbeitungsbereich 10b hindurch. Die Trennwand 11 soll die Verunreinigung des Messbereichs 10a mit den bei der spanabhebenden Randbearbeitung der Linsen 16a anfallenden Spanabfällen zumindest auf ein Minimum reduzieren. Zu diesem Zweck sind die Öffnungen 11a, 11b durch welche die Fördereinrichtungen 30a, 30b hindurchtreten, bevorzugt mit Türen versehen (nicht dargestellt), die die Öffnungen 11a, 11b vor dem Durchtritt einer von einer Fördereinrichtung 30a, 30b transportierten Linse 16a, 16b freigeben und nach dem Durchtritt wieder verschließen.

Im Ausführungsbeispiel sind im Bearbeitungsbereich 10b zwei vorzugsweise baugleiche Bearbeitungseinrichtungen 50 vorgesehen, die mit den Fördereinrichtungen 30a, 30b in Verbindung stehen.

Im Ausführungsbeispiel handelt es sich um Randbearbeitungseinrichtungen 50, die jeweils in einen Grobbearbeitungsbereich 51 und einen Feinbearbeitungsbereich 52 unterteilt sind.

Die zu bearbeitende Linse 16a wird zunächst im Grobbearbeitungsbereich 51 einer ersten spanabhebenden Randbearbeitung unterzogen, bei der die gewünschte Kontur der Linse 16a näherungsweise erzeugt wird.

Die derart vorbearbeitete Linse 16a wird im Anschluss daran vorzugsweise in den Feinbearbeitungsbereich 52 überführt, wo die gewünschte Kontur fertiggestellt wird. Die nun fertig randbearbeitete Linse 16b wird danach vorzugsweise wieder einer Fördereinrichtung 30a, 30b übergeben, in den Messbereich 10a der erfindungsgemäßen Vorrichtung 1' zurücktransportiert und dort wieder in der zugehörigen Transportkiste 13 abgelegt.

Zur Entfernung der bei der spanenden Randbearbeitung der Linsen 16a anfallenden Spanabfälle kann bspw. im Boden des Bearbeitungsbereichs 10b eine Absaugöffnung 69 vorgesehen sein, an welche in an sich bekannter Weise ein Absaugsystem mit einer Rohrleitung zur Wegförderung der Spanabfälle angeschlossen ist.

Vorteilhafterweise sind die Fördereinrichtungen 30a, 30b und die Bearbeitungseinrichtungen 50 an einem den Bearbeitungsbereich 10b überspannenden Tragrahmen befestigt (nicht dargestellt), um deren Verunreinigung möglichst zu reduzieren und ein problemloses Absaugen der Spanabfälle zu ermöglichen. Dann kann der Boden des Bearbeitungsbereichs 10b bspw. auch in Form einer Wanne 68 ausgebildet sein, um insbesondere das Sammeln der Spanabfälle im Bereich der Absaugöffnung 69 zu vereinfachen. Dann kann ggf. der Absaugvorgang als solcher auch diskontinuierlich und somit energiesparend und mit geringerer Lärmbelastung ausgestaltet werden.

In jeder Bearbeitungseinrichtung 50 können vorzugsweise zwei Linsen 16a zur gleichen Zeit bearbeitet werden, wobei sich je eine Linse 16a im Grobbearbeitungsbereich 51 und je eine Linse 16a im Feinbearbeitungsbereich 52 befindet. Bevorzugt können daher bei diesem Ausführungsbeispiel der erfindungsgemäßen Vorrichtung 1' zur gleichen Zeit und/oder in zeitüberlappender Weise jeweils zwei Linsen 16a vermessen und vier Linsen 16a randbearbeitet werden.

Vorzugsweise umgibt das Gehäuse 10 die Messeinrichtungen 40, 110, die Fördereinrichtungen 30a, 30b, die Handhabungseinrichtung 20, die Bearbeitungseinrichtungen 50 und/oder den Pufferbereich 17, insbesondere seitlich und/oder vollständig.

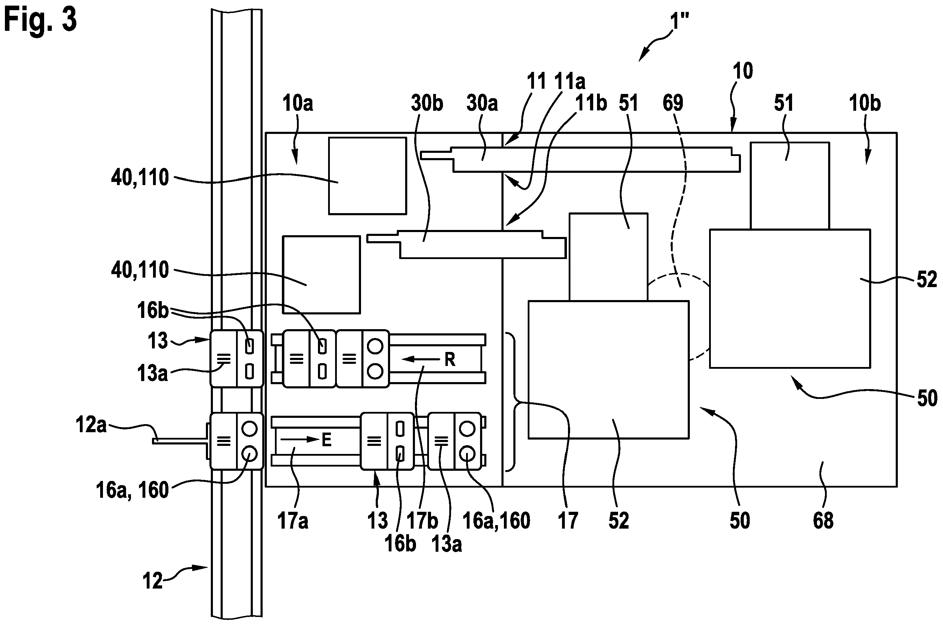

Fig. 3 zeigt in einer Draufsicht ein drittes Ausführungsbeispiel der erfindungsgemäßen Vorrichtung 1". Die Vorrichtung 1" entspricht im Wesentlichen der Vorrichtung 1' gemäß Fig. 2 und weist im Wesentlichen die gleichen Bauteile auf. Daher wurden diesbezüglich dieselben Bezugszeichen verwendet, und es wird insofern auf die obige Beschreibung zu Fig. 2 verwiesen.

Der wesentliche Unterschied zwischen der erfindungsgemäßen Vorrichtung 1' gemäß Fig. 2 und der erfindungsgemäßen Vorrichtung 1" gemäß Fig. 3 besteht darin, dass die Messeinrichtungen 40, 110 nicht nebeneinander, sondern versetzt zueinander angeordnet sind. Folglich sind die Fördereinrichtungen 30a, 30b parallel zueinander angeordnet und verbinden die Messeinrichtungen 40, 110 mit je einer Bearbeitungseinrichtung 50.

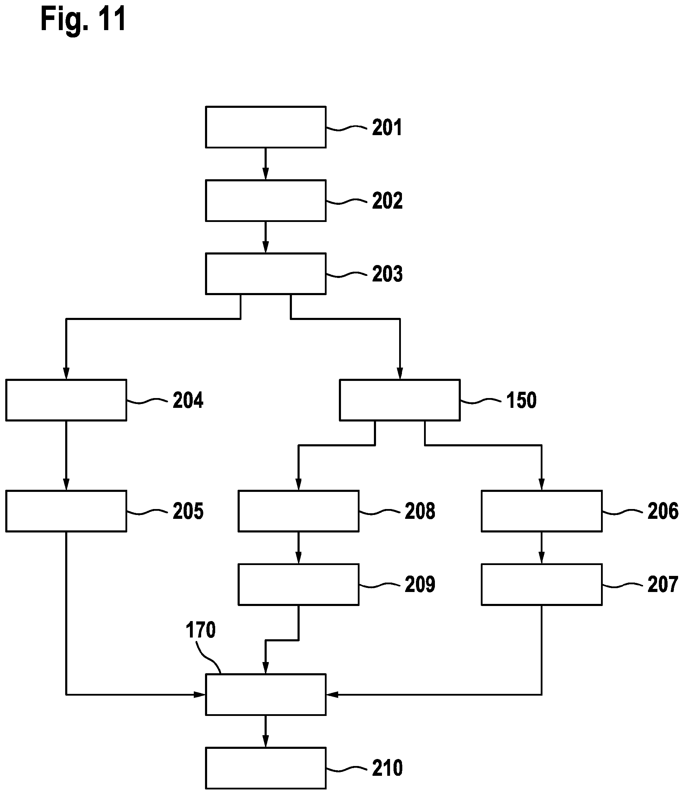

Die Übergabe der zu bearbeitenden Linsen 16a, 160 aus ihren Transportkisten 13 in eine frei wählbare Messeinrichtung 40, 110, von der Messeinrichtung 40, 110 auf eine frei wählbare Fördereinrichtung 30a, 30b sowie die Übergabe der fertig bearbeiteten Linsen 16b von der jeweiligen Fördereinrichtung 30a, 30b zurück in ihre Transportkisten 13 erfolgt über eine Handhabungseinrichtung bzw. -vorrichtung 20, wie sie beispielhaft in den Fig. 6a, 6b und 11 dargestellt ist (siehe dazu unten).

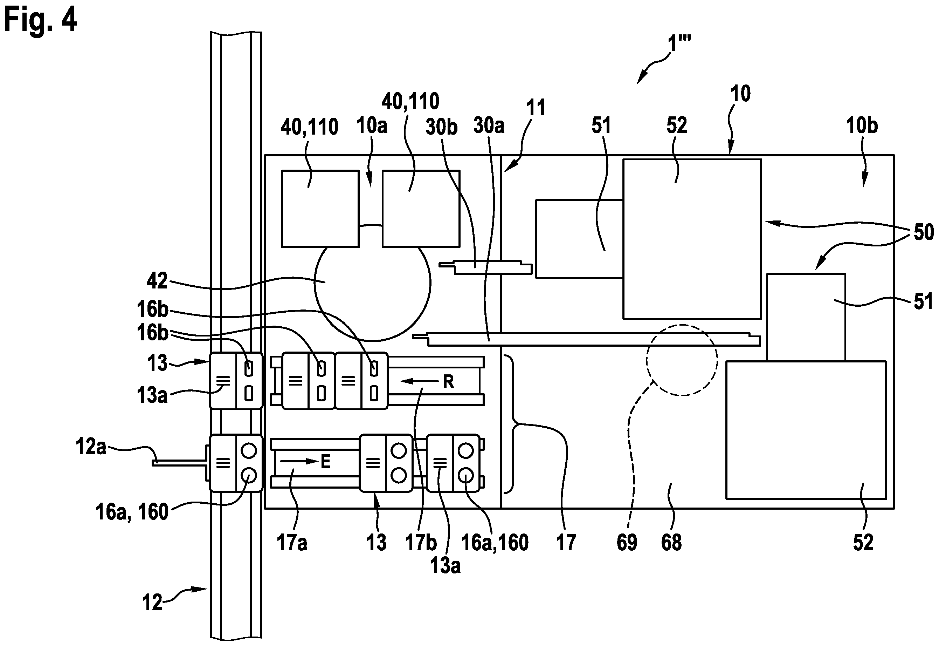

Fig. 4 zeigt in einer Draufsicht ein viertes Ausführungsbeispiel der erfindungsgemäßen Vorrichtung 1‴.

Die Vorrichtung 1‴ entspricht im Wesentlichen der Vorrichtung 1' gemäß Fig. 2 und weist im Wesentlichen die gleichen Bauteile auf. Daher wurden diesbezüglich dieselben Bezugszeichen verwendet und es wird insofern auf die obige Beschreibung zu Fig. 2 verwiesen.

Der wesentliche Unterschied zwischen der erfindungsgemäßen Vorrichtung 1' gemäß Fig. 2 und der erfindungsgemäßen Vorrichtung 1‴ gemäß Fig. 4 besteht darin, dass mehrere, im Ausführungsbeispiel zwei, Messeinrichtungen 40, 110 vorgesehen sind, denen ein Messtisch 42 zur Aufnahme der zu bearbeitenden Linsen 16a, 160 zugeordnet ist. Die Fördereinrichtungen 30a, 30b sind parallel zueinander angeordnet und verbinden den Messtisch 42 mit jeweils einer Bearbeitungseinrichtung 50. Die zu bearbeitenden Linsen 16a, 160 werden aus ihren Transportkisten 13 entnommen, zur Vermessung auf dem Messtisch 42 abgelegt und mittels Drehung des Messtischs 42 den jeweiligen Messeinrichtungen 40, 110 zugeführt. Nach der Vermessung werden die vermessenen, noch zu bearbeitenden Linsen 16a unter Beibehaltung ihrer Orientierung an die Fördereinrichtungen 30a, 30b übergeben; umgekehrt werden die fertig bearbeiteten Linsen 16b von den Fördereinrichtungen 30a, 30b in den Messbereich 10a zurücktransportiert und an ihre zugeordneten Transportkisten 13 übergeben.

Die Übergabe der zu bearbeitenden Linsen 16a aus ihren Transportkisten 13 auf den Messtisch 42, vom Messtisch 42 auf eine frei wählbare Fördereinrichtung 30a, 30b sowie die Übergabe der fertig bearbeiteten Linsen 16b von der jeweiligen Fördereinrichtung 30a, 30b zurück in ihre Transportkisten 13 erfolgt über eine Handhabungseinrichtung bzw. -vorrichtung 20, wie sie beispielhaft in den Figuren 6a, 6b und 11 dargestellt ist (siehe dazu unten).

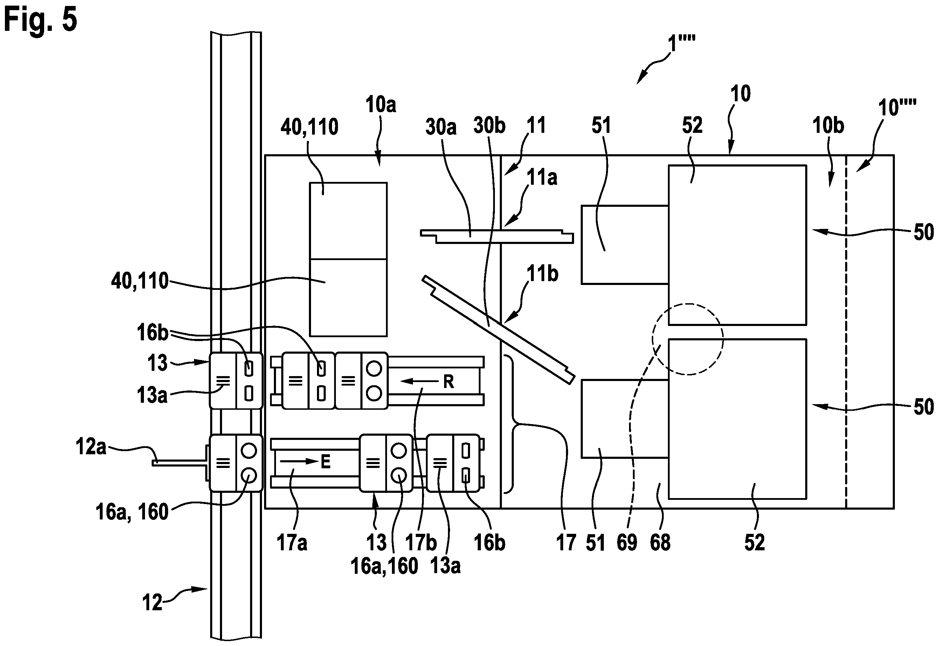

Fig. 5 zeigt in einer Draufsicht ein fünftes Ausführungsbeispiel der erfindungsgemäßen Vorrichtung 1ʺʺ. Die Vorrichtung 1ʺʺ entspricht im Wesentlichen der Vorrichtung 1' gemäß Fig. 2 und weist im Wesentlichen die gleichen Bauteile auf. Daher wurden diesbezüglich dieselben Bezugszeichen verwendet, und es wird insofern auf die obige Beschreibung zu Fig. 2 verwiesen.

Der wesentliche Unterschied zwischen der erfindungsgemäßen Vorrichtung 1' gemäß Fig. 2 und der erfindungsgemäßen Vorrichtung 1ʺʺ gemäß Fig. 5 besteht darin, dass die Messeinrichtungen 40, 110 und die Bearbeitungseinrichtungen 50 um 90° gedreht angeordnet sind. Damit kann das Gehäuse 10ʺʺ verkürzt ausgebildet sein, wie es mittels der strichpunktierten Linie angedeutet ist.

Die Übergabe der zu bearbeitenden Linsen 16a, 160 aus ihren Transportkisten 13 in eine frei wählbare Messeinrichtung 40, 110, von der Messeinrichtung 40, 110 auf eine frei wählbare Fördereinrichtung 30a, 30b sowie die Übergabe der fertig bearbeiteten Linsen 16b von der jeweiligen Fördereinrichtung 30a, 30b zurück in ihre Transportkisten 13 erfolgt über eine Handhabungseinrichtung bzw. -vorrichtung 20, wie sie beispielhaft in den Fig. 6a, 6b und 11 dargestellt ist (siehe dazu unten).

Die Fig. 2 bis 5 zeigen somit exemplarisch, durch welches Bauprinzip die erfindungsgemäße Vorrichtung 1, 1', 1", 1 "', 1ʺʺ gekennzeichnet ist. Dieses Bauprinzip umfasst die Anordnung mindestens einer Messeinrichtung 40, 110 mit mindestens einer Bearbeitungseinrichtung 50 und deren Verbindung mittels mindestens einer Fördereinrichtung 30a, 30b.

Im Ergebnis werden im Ausführungsbeispiel zu bearbeitende Linsen 16a, 160 vermessen und randbearbeitet, um gemäß definierter Fertigungsdaten und/oder Gestelldaten fertig bearbeitete Linsen 16b zu erhalten, die anschließend in Brillenfassungen eingesetzt werden können.

Die Zahl der zu kombinierenden Messeinrichtungen 40, 110 und Bearbeitungseinrichtungen 50 kann beliebig gewählt werden, je nach bspw. Wahl der Bauart und/oder Funktionsweise der jeweiligen Messeinrichtungen 40, 110 und Bearbeitungseinrichtungen 50, ihrer Mess- bzw. Bearbeitungsgeschwindigkeit pro Linse 16a, 160 etc.

Die Messeinrichtungen 40, 110 und Bearbeitungseinrichtungen 50 können in der Vorrichtung 1, 1', 1", 1‴, 1ʺʺ beliebig zueinander angeordnet bzw. orientiert werden, bspw. abhängig von ihrer Größe und/oder ihrer Bauart.

Die Bauart und die Anzahl der Fördereinrichtungen 30a, 30b kann dann abhängig von der Anzahl und ggf. auch von der Anordnung der Messeinrichtungen 40, 110 und Bearbeitungseinrichtungen 50 in der jeweiligen Vorrichtung 1, 1', 1", 1‴, 1ʺʺ gewählt werden.

In den Ausführungsbeispielen gemäß den Fig. 2 bis 5 wurden jeweils zwei Messeinrichtungen 40, 110 und zwei Bearbeitungseinrichtungen 50 mit je einem Grobbearbeitungsbereich 51 und einem Feinbearbeitungsbereich 52 gewählt. Diese Auswahl kann jedoch beliebig geändert, variiert und/oder erweitert werden. Daher ist die Einrichtung eines Pufferbereichs 17 mit Pufferbändern 17a, 17b vorteilhaft, um genügend zu bearbeitende Linsen 16a vorzuhalten bzw. fertig bearbeitete Linsen 16b zügig abzutransportieren, um Verzögerungen beim Vermessen und/oder Bearbeiten der zu bearbeitenden Linsen 16a, 160 möglichst zu vermeiden.

Die Fig. 6a, 6b und 12 zeigen ein Ausführungsbeispiel einer Handhabungseinrichtung bzw. -vorrichtung 20 für Linsen 16a, 160 16b.

Die Handhabungseinrichtung bzw. -vorrichtung 20 ist im Ausführungsbeispiel dem Messbereich 10a der erfindungsgemäßen Vorrichtung 1, 1', 1", 1‴, 1ʺʺ zugeordnet.

Fig. 6a zeigt die Handhabungseinrichtung bzw. -vorrichtung 20 in einer Draufsicht bzw. in Richtung der Pfeile Via, Via in Fig. 6b. Dementsprechend zeigt Fig. 6b die Handhabungseinrichtung bzw. -vorrichtung 20 in einer Seitenansicht bzw. in Richtung der Pfeile Vlb, Vlb in Fig. 6a. Die Fig. 6a, 6b zeigen ferner die zwischen den Pufferbändern 17a, 17b angeordneten Stoppvorrichtungen 18 zur Steuerung des Vorschubs der Transportkisten 13 für die Linsen 16a, 160, 16b auf den Pufferbändern 17a, 17b. Die Fig. 6a, 6b zeigen schließlich auch ein Lesegerät 19 zum Auslesen der auf den Datenträgern 13' gespeicherten Fertigungsdaten und/oder Gestelldaten für die in den zugehörigen Transportkisten 13 befindlichen zu bearbeitenden Linsen 16a, 160.

Die Handhabungseinrichtung bzw. -vorrichtung 20 weist eine erste Handhabungseinheit 20a auf. Die erste Handhabungseinheit 20a dient vorzugweise zum einen zum Transfer von zu bearbeitenden Linsen 16a, 160 aus ihren ihnen zugeordneten, insbesondere auf den Pufferbändern 17a, 17b befindlichen Transportkisten 13 zu den jeweiligen Messeinrichtungen 40, 110 zugeordneten Linsenhalterungen 41, 134.

Die erste Handhabungseinrichtung bzw. Handhabungseinheit 20a dient ferner vorzugsweise zum Transfer von fertig bearbeiteten Linsen 16b von den Fördereinrichtungen 30a, 30b zurück zu ihren jeweiligen, ihnen zugeordneten Transportkisten 13 (siehe dazu unten).

Zu diesem Zweck weist die erste Handhabungseinheit 20a im Ausführungsbeispiel vorzugsweise eine erste Schiene 21 mit zwei Führungen 21a, 21b auf, an der eine zweite Schiene 22 rechtwinklig angeordnet und in an sich bekannter Weise in den Führungen 21a, 21b geführt ist. Die zweite Schiene 22 ist in einer mit dem Pfeil L bezeichneten Richtung (in Richtung der Koordinate x) entlang der ersten Schiene 21 - im Ausführungsbeispiel mittels eines Motors 29a elektrisch angetrieben - bewegbar. An der zweiten Schiene 22 ist eine in einer mit dem Pfeil M bezeichneten Richtung (in Richtung einer Koordinate y) - im Ausführungsbeispiel mittels eines Motors 29b elektrisch angetriebene - bewegbare Greifvorrichtung 23 angeordnet und geführt. Die Greifvorrichtung 23 weist einen - im Ausführungsbeispiel pneumatisch angetriebenen - in einer mit dem Pfeil N bezeichneten Richtung (in Richtung einer Koordinate z) bewegbaren Greifer oder Sauger 24 zum Greifen bzw. Ansaugen der Linsen 16a, 160, 16b auf.

Die Handhabungseinrichtung bzw. -vorrichtung 20 weist ferner vorzugsweise eine zweite Handhabungseinheit 20b auf. Die zweite Handhabungseinheit 20b dient insbesondere zum Transfer von vermessenen, noch zu bearbeitenden Linsen 16a aus den jeweiligen Messeinrichtungen 40, 110 zugeordneten Linsenhalterungen 41, 134 zu den frei wählbaren Fördereinrichtungen 30a, 30b (siehe hierzu auch Fig. 11).

Zu diesem Zweck weist die zweite Handhabungseinheit 20b im Ausführungsbeispiel vorzugsweise eine erste Schiene 25 auf, an der eine zweite Schiene 26 angeordnet und in an sich bekannter Weise geführt ist. Die zweite Schiene 26 ist in einer mit dem Pfeil O bezeichneten Richtung (in Richtung einer Koordinate y) entlang der ersten Schiene 25 bewegbar, im Ausführungsbeispiel mittels eines elektrischen Antriebsmotors 29c. An der zweiten Schiene 26 ist eine in einer mit dem Pfeil P bezeichneten Richtung (in Richtung einer Koordinate x) - im Ausführungsbeispiel mittels eines Motors 29d elektrisch bewegbare - Greifvorrichtung 27 angeordnet und in an sich bekannter Weise geführt. Die Greifvorrichtung 27 weist einen - im Ausführungsbeispiel pneumatisch angetriebenen - in einer mit dem Pfeil Q bezeichneten Richtung (in Richtung einer Koordinate z) bewegbaren Greifer oder Sauger 28 zum Greifen bzw. Ansaugen der Linsen 16a auf.

Die Handhabungseinheiten 20a, 20b der Handhabungseinrichtung bzw. -vorrichtung 20 sind vorzugsweise an einem - nicht dargestellten - Tragrahmen der erfindungsgemäßen Vorrichtung 1, 1', 1", 1 "', 1ʺʺ befestigt.

Die mindestens eine Messeinrichtung 40, 110 kann von beliebiger Bauart sein und bspw. mittels mechanischer Abtastung oder berührungsloser Abtastung arbeiten. Im Ausführungsbeispiel ist die mindestens eine Messeinrichtung zur berührungslosen Vermessung der zu bearbeitenden Linsen mittels Deflektometrie und/oder Transmissionsmessung und/oder Lumineszenzstrahlung ausgelegt. Zu diesem Zweck ist jede zu bearbeitende Linse 16a in einer Linsenhalterung 41 aufgenommen.

Im Ausführungsbeispiel sind Paare von Linsenhalterungen 41 vorgesehen, die gegeneinander verschwenkt werden können. Somit kann die Linsenhalterung 41 eines Paares mit einer Linse 16a beladen werden, während die zweite Linsenhalterung 41 des Paares, beladen mit einer Linse 16a, sich innerhalb der Messeinrichtung 40, 110 befindet. Jede Linsenhalterung 41 kann bspw. einen kreisförmigen Rahmen 41a mit drei oder vier Greifelementen (nicht dargestellt) aufweisen, wie sie bspw. in der WO 2016/095939 A1 beschrieben sind.

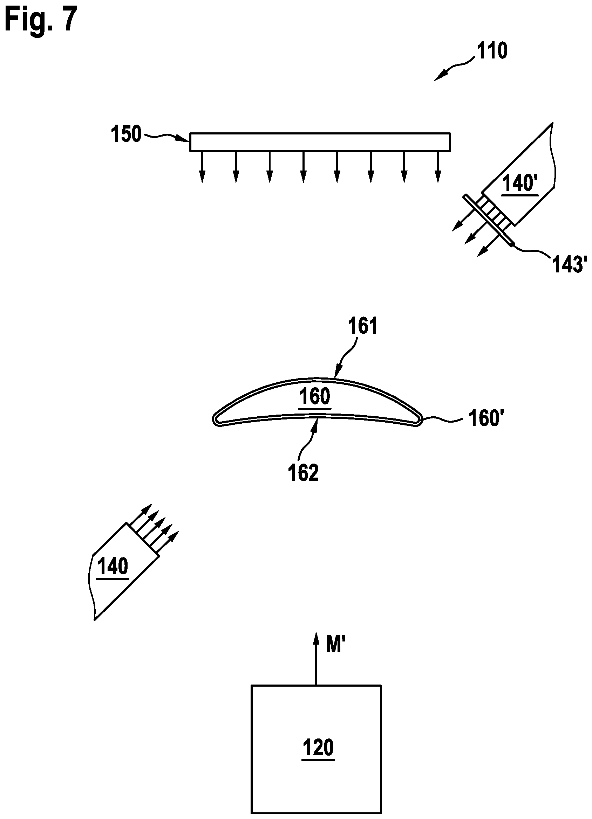

Die Fig. 7 bis 11 zeigen ein Ausführungsbeispiel einer Messeinrichtung 110 bzw. des mit einer derartigen Messeinrichtung 110 verwendbaren Messverfahrens.

Gemäß Fig. 7 dient das Ausführungsbeispiel zum Vermessen einer Linse 160 mit einer im Ausführungsbeispiel konvexen Oberseite 161 und einer im Ausführungsbeispiel konkaven Unterseite 162.

Die Linse 160 kann ferner in an sich bekannter Weise mit einer Beschichtung 160', bspw. einer Antireflex- und/oder einer Hartbeschichtung (Hardcoat) versehen sein.

Die Vorrichtung 110 weist erfindungsgemäß zumindest eine erste Strahlungsquelle 140, ggf. eine weitere Strahlungsquelle 140' mit einer vorgeschalteten Schlitzblende oder Maske 143' zur Erzeugung eines Strahlungsmusters, eine zweite Strahlungsquelle 150 und/oder eine Mess- und/oder Detektionseinrichtung 120 auf.

Die Ausrichtung einer Mess- und/oder Detektionseinheit, bspw. des Kameraobjektivs 123 einer Kamera 122 der Mess- und/oder Detektionseinrichtung (siehe unten) definiert eine Messachse M'.

Die Vorrichtung 110 kann in an sich bekannter Weise auf einem Gestell, einer Halterung oder einem Arbeitstisch angeordnet sein. Die Vorrichtung kann aber bspw. auch in eine Einrichtung zur Bearbeitung, bspw. zur formgebenden Bearbeitung eines optisch wirksamen Gegenstands, bspw. einer optischen Linse, insbesondere einer ophthalmischen Linse, integriert sein.

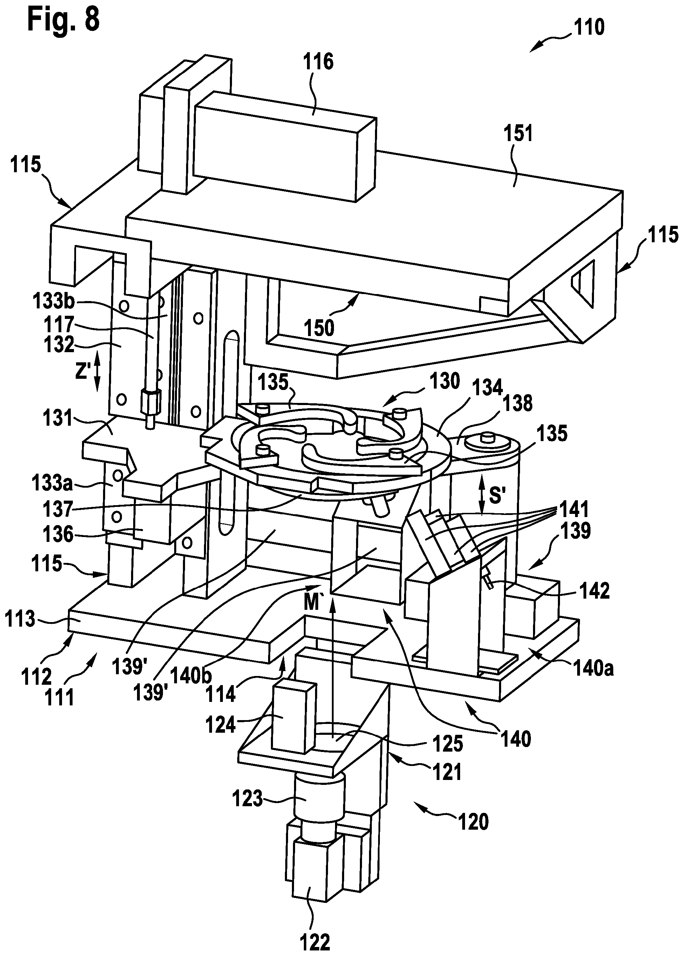

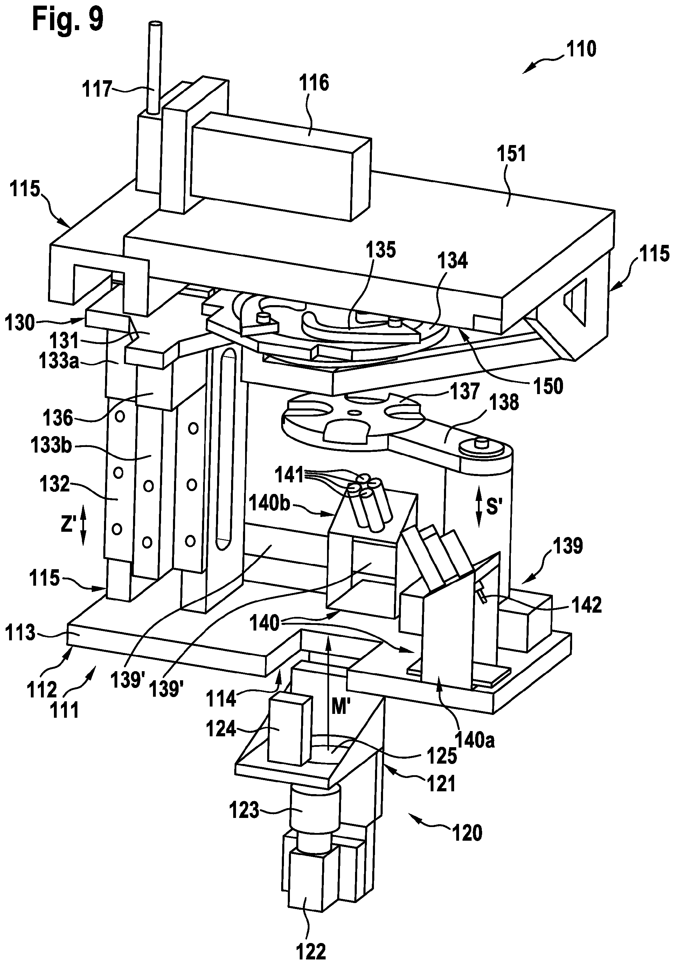

Wie aus den Fig. 8 und 9 ersichtlich ist, weist ein Ausführungsbeispiel einer erfindungsgemäßen Vorrichtung 110 einen Haltetisch 111 mit einer Unterseite 112 und einer Oberseite 113 auf.

An dem Haltetisch 111, insbesondere dessen Unterseite 112, ist vorzugsweise eine Kameraeinheit 120 befestigt. Die Kameraeinheit 120 weist eine Halterung 121 auf, an der eine Kamera 122 (im Ausführungsbeispiel eine Kamera mit einem CCD-Sensor) mit einem Kameraobjektiv 123 gehalten ist.

Das Kameraobjektiv 123 ist vorzugsweise vertikal nach oben gerichtet.

Die Kamera 122 ist im Ausführungsbeispiel mit einem Polarisationsfilter (nicht dargestellt) versehen. Daher ist oberhalb des Kameraobjektivs 123 auf der Halterung 121 ein Motor 124, im Ausführungsbeispiel ein elektrisch betriebener Schrittmotor, zur Drehung des Polarisationsfilters angeordnet. Der Polarisationsfilter dient in an sich bekannter Weise zur Bestimmung der Polarisationsrichtung einer polarisierten Linse 160.

Ferner weist die Kamera 122 bzw. das Kameraobjektiv 123 vorzugsweise eine Filtereinrichtung (nicht dargestellt) zur Absorption und/oder Deflektion der von den Laserdioden 141 (siehe unten) emittierten Anregungsstrahlung auf.

Durch eine Öffnung 124 in der Halterung 121 und eine Ausnehmung 114 im Haltetisch ergibt sich für das Kameraobjektiv 123 ein freier Messweg in vertikaler Richtung, wodurch eine vertikal verlaufende Messachse M' definiert ist.

An dem Haltetisch 111, insbesondere auf dessen Oberseite 113, ist vorzugsweise ein Halteelement 115 angeordnet. Am Halteelement 115 ist ein Zahnstangengetriebe mit einer einen Motor aufweisenden Antriebseinheit 116 gehalten. Die Antriebseinheit 116 bewegt in an sich bekannter Weise eine Zahnstange 117 entlang einer Bewegungsachse z' (im Folgenden: z'-Achse). Die z'-Achse und die Messachse M' verlaufen im Ausführungsbeispiel in vertikaler Richtung parallel zueinander.

Am unteren Ende der Zahnstange 117 ist vorzugsweise eine Halteplatte 131 einer Greifeinheit 130 ortsfest angeordnet. Die Halteplatte 131 ist an einem Führungsschuh 133a befestigt. Der Führungsschuh 133a ist an einer Führungsschiene 133b vorzugsweise spielfrei geführt, bspw. in an sich bekannter Weise rollend vorgespannt). Die Führungsschiene 133b ist an einer Führungsplatte 132 befestigt, die wiederum an der Halterung 115 gehalten ist.

An der Halteplatte 131 ist vorzugsweise eine Greifeinrichtung 134, im Ausführungsbeispiel eine Zentrier-/ Greifeinrichtung, mit bewegbaren Greifelementen 135 befestigt, wie sie bspw. aus der WO 2016/095939 A1 bekannt ist. Die Greifeinrichtung 134 dient zum Greifen und Zentrieren der Linse 160. Mit Hilfe des Zahnstangengetriebes können die Halteplatte 131 und damit die Greifeinrichtung 134 entlang der Führungsschiene 133b in Richtung der z'-Achse vertikal verschoben werden.

Die Greifelemente 135 sind im Ausführungsbeispiel pneumatisch bewegbar. Unterhalb der Halteplatte 131 ist im Ausführungsbeispiel daher ein pneumatischer Zylinderantrieb 136 zum Bewegen der Greifelemente 135 vorgesehen.

Unterhalb der Greifeinrichtung 134 ist vorzugsweise ein Ablagetisch 137 angeordnet. Der Ablagetisch 137 ist vorzugsweise mittels eines Haltearms 138 um eine parallel zur z'-Achse und/oder parallel zur Messachse M' verlaufende Schwenkachse S' verschwenkbar (im Ausführungsbeispiel pneumatisch über mittels eines Antriebszylinders 139') auf einer Lager- und Schwenkeinrichtung 139 angeordnet.

Vorzugsweise ist auf der Oberseite 113 der Halteplatte 111 ferner eine erste Strahlungsquelle 140 vorgesehen. Im Ausführungsbeispiel besteht diese erste Strahlungsquelle 140 aus zwei Gruppen 140a, 140b von je vier Laserdioden 141. Die Laserdioden 141 jeder Gruppe 140a, 140b sind im Ausführungsbeispiel parallel zueinander in je zwei Reihen und in einem Winkel von 15° zur z'-Achse bzw. zur Messachse M' angeordnet. Die Laserdioden 141 können mit geeigneten Elementen zum Erzeugen linienförmiger Strahlung versehen sein, bspw. Zylinderlinsen, Rasterlinsen, diffraktiven optischen Elementen (DOE). Auch die Verwendung computergenerierter Hologramme (CGH) ist möglich. Die Laserdioden 141 sind im Ausführungsbeispiel ferner gegeneinander versetzt angeordnet. Im Ergebnis sind auch die von den Laserdioden 141 emittierten linienförmigen Strahlen senkrecht zu ihrer Ausbreitungsrichtung zueinander versetzt oder beabstandet.

Im Ausführungsbeispiel beträgt der Abstand der linienförmigen Strahlen zueinander ca. 10 mm.

Die beiden Gruppen 140a, 140b von Laserdioden 141 sind wiederum in einem rechten Winkel zueinander angeordnet. Die Laserdioden 141 sind über Leitungen 142 derart mit einer Stromversorgungseinrichtung (nicht dargestellt) verbunden, dass sie unabhängig voneinander und in beliebigen Kombinationen schaltbar sind.

Unterhalb der Antriebseinheit 116 für das Zahnstangengetriebe ist vorzugsweise eine Aufnahmeplatte 151 zur Aufnahme einer zweiten Strahlungsquelle 150 angeordnet. Als zweite Strahlungsquelle 150 ist im Ausführungsbeispiel ein TFT-basierter Flüssigkristall-Flachbildschirm vorgesehen. Die zweite Strahlungsquelle 150 ist vorzugsweise oberhalb der Greifeinrichtung 134 angeordnet und in einer senkrecht zur z'-Achse bzw. zur Messachse M' orientierten Ebene angeordnet.

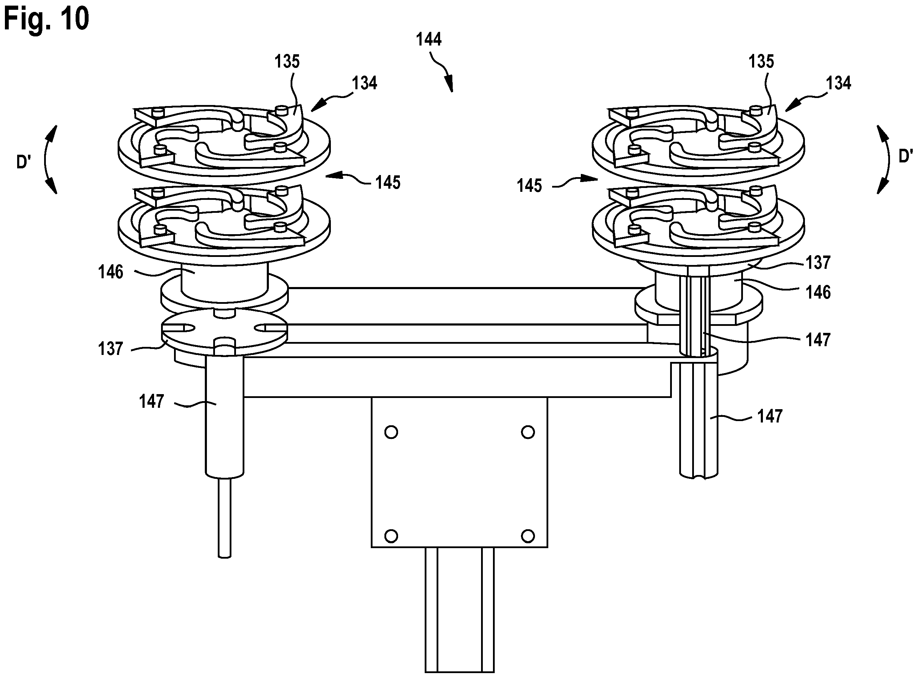

Die Messeinrichtung 110 kann auch aus zwei Teilen mit je einer Kamera 122, einer ersten Strahlungsquelle 140 und einer zweiten Strahlungsquellen 150 bestehen, wie sie oben beschrieben sind. Dann kann eine Greif- und Zentrieranordnung 144 vorgesehen sein, wie sie beispielhaft in Fig. 10 dargestellt ist.

Die Anordnung 144 weist insgesamt zwei Paare 145 von je zwei Greifeinrichtungen 134 mit Greifelementen 135, wie sie oben beschrieben sind, auf. Jedes Paar 145 von Greifeinrichtungen 134 ist einem Teil der Messeinrichtung 110 mit je einer Kamera 122, einer ersten Strahlungsquelle 140 und/oder einer zweiten Strahlungsquelle 150 zugeordnet.

Die Paare 145 und/oder Greifeinrichtungen 134 eines Paares 145 sind vorzugsweise in einer gemeinsamen, insbesondere horizontalen, Ebene angeordnet. Dies ist auch aus Fig. 12 ersichtlich, in der auf der rechten Seite der Abbildung vier Greifeinrichtungen 134 dargestellt sind.

Jedes Paar 145 von Greifeinrichtungen 134 ist vorzugsweise auf einer Dreheinrichtung 146 in Richtung der Pfeile D um 180° drehbar gelagert.

Mit anderen Worten sind die Paare 145 von Greifeinrichtungen 134 jeweils um eine bevorzugt vertikale Achse drehbar, insbesondere um 180°, besonders bevorzugt sodass bei einer Drehung um 180° die Greifeinrichtungen 134 eines Paares ihre Positionen tauschen. Bevorzugt bildet die Dreheinrichtung 146 die Drehachse für das Paar 145. Die Dreheinrichtung 146 ist vorzugsweise unterhalb der Greifeinrichtungen 134 und/oder zwischen zwei den beiden Greifeinrichtungen 134 des Paares 145 angeordnet.

Jedem Paar 145 von Greifeinrichtungen 134 ist ferner vorzugsweise je ein Ablagetisch 137, wie er oben beschrieben ist, zugeordnet. Bevorzugt ist jeder Ablagetisch 137 mittels einer Verstelleinrichtung 147 höhenverstellbar ausgebildet und/oder so angeordnet bzw. anordenbar, dass er sich in Bezug auf der ihr zugeordneten Greifeinrichtung 134 in einer Beladeposition gemäß Fig. 8 (rechte Hälfte von Fig. 10) oder in einer Messposition gemäß Fig. 9 (linke Hälfte von Fig. 10) befindet.

Die zweite, in Fig. 10 jeweils im Bildhintergrund angeordnete Greifeinrichtung 134 ist in Bezug auf die ihr zugeordneten Elemente Kamera 122, erste Strahlungsquelle 140 und/oder zweite Strahlungsquelle 150 vorzugsweise so positioniert, dass eine (weitere unten genauer beschriebene) Messung stattfinden kann.

In der Position gemäß der rechten Hälfte von Fig. 10 kann die vordere Greifeinrichtung 134, wie unten beschrieben, mit einer zu vermessenden Linse 160 beladen bzw. entladen werden, während in der hinteren Greifeinrichtung 134 eine (nicht dargestellte) Linse gehalten und vermessen wird.

In der Position gemäß der linken Hälfte von Fig. 10 kann in der vorderen Greifeinrichtung 134 eine zu vermessende Linse 160 und in der hinteren Greifeinrichtung 134 eine fertig vermessene Linse 160 gehalten sein (nicht dargestellt), so dass dieses Paar 145 um 180° gedreht werden kann. Dann kann die zu vermessende Linse 160 wie unten beschrieben vermessen werden, während die fertig vermessene Linse 160 wie unten beschrieben entladen werden kann.

Im Folgenden wird ein Ausführungsbeispiel des Messverfahrens beschrieben (vgl. Fig. 8, 9 und 11):
Zu Beginn des Verfahrens befindet sich die Greifeinrichtung 134 der erfindungsgemäßen Vorrichtung 110 vorzugsweise in ihrer Beladeposition (vgl. Fig. 8, Fig. 10 rechts). In dieser Beladeposition ist der Ablagetisch 137 vorzugsweise unmittelbar unterhalb der Greifeinrichtung 134 angeordnet.

Zunächst wird die Vorrichtung 110 in an sich bekannter Weise (vgl. WO 2016/095939 A1) im Verfahrensschritt 201 mit einem zu vermessenden optisch wirksamen Element, im Ausführungsbeispiel einer ggf. mit einer Beschichtung 160' versehenen Linse 160, bspw. für ein Brillenglas, beladen, indem dieses auf dem Ablagetisch 137 abgelegt wird. Die Linse 160 wird dabei vorzugsweise so orientiert, dass ihre im Ausführungsbeispiel konkave Unterseite 162 zum Kameraobjektiv 123 hin und ihre im Ausführungsbeispiel konvexe Oberseite 161 zur zweiten Strahlungsquelle 150 hin ausgerichtet ist.

Ferner werden im Verfahrensschritt 202 die Greifelemente 135 zunächst derart betätigt, dass die Linse 160 entlang ihres Umfangs innerhalb der Greifeinrichtung 134 in Bezug auf diese zentriert wird.

Anschließend werden im Verfahrensschritt 202 die Greifelemente 135 der Greifeinrichtung 134 derart betätigt, dass die Linse 160 mittels der Greifelemente 135 klemmend gehalten wird, wobei die Zentrierung der Linse 160 im Wesentlichen beibehalten wird.

Nun wird im Verfahrensschritt 203 zunächst die Greifeinrichtung 134 entlang der z'-Achse so weit nach oben bewegt, dass der Ablagetisch 137 aus dem Messbereich des Kameraobjektivs 123 der Kamera 122 herausgeschwenkt werden kann, um die Messachse M' für das Kameraobjektiv 123 freizumachen.

Schließlich wird im Verfahrensschritt 203 die Greifeinrichtung 134 zusammen mit der darin klemmend gehaltenen Linse 160 mittels des Zahnstangengetriebes entlang der z'-Achse weiter nach oben in Richtung der zweiten Strahlungsquelle 150 verschoben.

Die Greifeinrichtung 134 der erfindungsgemäßen Vorrichtung 110 befindet sich nun in einer definierten Messposition (vgl. Fig. 9, Fig. 10 links). Diese Messposition kann unabhängig von den Eigenschaften des zu vermessenden optisch wirksamen Elements unverändert bleiben, um zur Standardisierung des erfindungsgemäßen Verfahrens beizutragen.

Es können, sukzessiv oder zeitgleich, drei Messverfahren durchgeführt werden (vgl. Fig. 10):
1. Bestimmung der räumlichen Lage der Unterseite 162 der Linse 160
   Im Verfahrensschritt 204 emittiert jede Laserdiode der beiden Gruppen 140a, 140b von Laserdioden 141 einen linienförmigen Strahl, im Ausführungsbeispiel Anregungsstrahlung mit einer Wellenlänge von 405 nm oder 450 nm, aus. Diese definierten Wellenlängen können bspw. mittels eines nicht dargestellten Filters aus der von den Laserdioden 141 emittierten Strahlung herausgefiltert werden.
   Die von den Laserdioden 141 emittierten linienförmigen Strahlen weisen aufgrund der Anordnung der Laserdioden 141 senkrecht zu ihrer Ausbreitungsrichtung zueinander einen Abstand von ca. 10 mm auf. Im Ergebnis treffen die von allen im Ausführungsbeispiel acht Laserdioden emittierten linienförmigen Strahlen in Form eines Linienmusters von zwei rechtwinklig zueinander angeordneten Gruppen aus je vier Linien auf den Werkstoff der Linse 160 und/oder ihrer Beschichtung 160'. Die von den derart angeordneten linienförmigen Strahlen angeregte Fluoreszenzstrahlung des Werkstoffs der Linse 160 und/oder ihrer Beschichtung 160' mit einer Wellenlänge von mehr als 405 nm bzw. 450 nm wird daher in Form von zwei rechtwinklig zueinander angeordneten Gruppen aus je vier voneinander beabstandeter Linien (also in Form eines Gitter- oder Karomusters) emittiert.
   Im Ausführungsbeispiel treffen zwei im rechten Winkel zueinander angeordnete Gruppen aus je vier linienförmigen Strahlen auf die im Ausführungsbeispiel konkave Unterseite 162 der Linse 160. Die vom Werkstoff der Linse 160 und/oder ihrer Beschichtung 160'emittierte Fluoreszenzstrahlung bildet somit ein Karo- oder Gittermuster aus zwei mal vier fluoreszierenden Linien mit einer Wellenlänge von im Ausführungsbeispiel mehr als 405 nm bzw. 450 nm. Diese Fluoreszenzstrahlung wird im Verfahrensschritt 205 vom Kameraobjektiv 123 erfasst und im Ausführungsbeispiel mittels eines CCD-Sensors der Kamera 122 detektiert. Wenn die Kamera 122 bzw. das Kameraobjektiv 123 einen Filter zur Absorption oder Deflektion des von den Laserdioden 141 emittierten Anregungsstrahlung aufweist, kann die Fluoreszenzstrahlung besonders zuverlässig und störungsarm detektiert werden. Die daraus resultierenden Messdaten werden einer Auswerteeinheit 170 zugeführt.
   Die Messdaten werden mittels eines an sich bekannten Triangulationsverfahrens (Streifenprojektion als 3D-Messverfahren) ausgewertet. Damit wird in an sich bekannter Weise die räumliche Lage der im Ausführungsbeispiel konkaven Unterseite 162 der Linse 160 ermittelt. Bei nicht symmetrischen Linsen (bspw. Freiformlinsen) ist das Messergebnis eindeutig. Bei symmetrischen Linsen (bspw. sphärischen Linsen) werden zur Bestimmung ihrer Lage im Raum noch Daten zu ihrer Randkontur (siehe dazu unten) benötigt.
   Die erfindungsgemäße Vorrichtung 110 kann kalibriert werden, indem das vorstehend beschriebene Verfahren mit einem Flachglas als Messobjekt durchgeführt wird.
2. Bestimmung von Kenngrößen der Linse 160
   Die zweite Strahlungsquelle 150 (im Ausführungsbeispiel ein TFT-basierter LCD-Bildschirm) sendet im Verfahrensschritt 206 Strahlen in einem definierten Muster (bspw. einem Streifenmuster) in Richtung der im Ausführungsbeispiel konvexen Oberseite 161 der Linse 160 aus. Die Strahlen treten durch die Linse 160 hindurch, wobei das definierte Muster entsprechend der Kenngrößen der Linse 160, insbesondere ihrer Kontur, ihrer Randkontur, etwaiger Markierungen (bspw. Lasergravuren) und/oder etwaiger Mehrstärkenzonen (bspw. Bifokal- oder Trifokalzonen) der Linse 160 verändert wird. Die resultierende Transmissionsstrahlung wird im Verfahrensschritt 207 vom Kameraobjektiv 123 der Kamera 122 erfasst und im Ausführungsbeispiel mittels des CCD-Sensors der Kamera 122 in Form von Messsignalen detektiert. Die aus dieser Transmissionsmessung resultierenden Messdaten werden der Auswerteeinheit 170 zugeführt und ausgewertet.
   Die erfindungsgemäße Vorrichtung 110 kann kalibriert werden, indem das vorstehend beschriebene Verfahren mit einem Flachglas als Messobjekt durchgeführt wird.
3. Bestimmung der Brechkraft der Linse 160
   Die zweite Strahlungsquelle 150 (im Ausführungsbeispiel ein TFT-basierter LCD-Bildschirm) sendet im Verfahrensschritt 208 Strahlen in Form definierter Pixel in Richtung der im Ausführungsbeispiel konvexen Oberseite 161 der Linse 160 aus. Die Strahlen treten durch die Linse 160 hindurch, wobei sie abhängig von den optischen Eigenschaften der Linse 160, abgelenkt werden. Die resultierende Transmissionsstrahlung wird im Verfahrensschritt 209 vom Kameraobjektiv 123 der Kamera 122 erfasst und im Ausführungsbeispiel mittels des CCD-Sensors der Kamera 122 in Form von Messpunkten detektiert.
   Zur Auswertung der Messpunkte wird im Ausführungsbeispiel ein an sich bekanntes Raytracing-Verfahren verwendet (d. h. ein auf der Aussendung von Strahlen basierender Algorithmus zur Rückverfolgung der ermittelten Messpunkte zu ihrer Quelle, also den definierten Pixeln). Mittels des Raytracing-Verfahrens werden die vom CCD-Sensor der Kamera 122 erfassten resultierenden Messpunkte mit den auf der zweiten Strahlungsquelle 150 angeordneten Pixeln (d. h. den Ausgangspunkten der in Form von Messpunkten erfassten Strahlen) korreliert. Zum Zwecke der Zuordnung der vom CCD-Sensor erfassten Messpunkte zu den in der zweiten Strahlungsquelle 150 definierten Pixeln ist die zweite Strahlungsquelle 150 in an sich bekannter Weise entsprechend kodiert. Die aus der Transmissionsmessung und dem Raytracing-Verfahren resultierenden Messdaten werden der Auswerteeinheit 170 zugeführt. Bei diesem Messverfahren ist es von Vorteil, wenn das definierte Muster der von der zweiten Strahlungsquelle 150 ausgesendeten Strahlen so gewählt ist, dass am CCD-Sensor eine zureichende Signaltrennung, d. h. eine zureichende Auflösung der Messsignale erzielt wird, so dass im optimalen Fall jedes Messsignal ausgewertet werden kann.
   Die Auswertung der Messdaten ergibt die Brechkraft der Linse 160.
   Die erfindungsgemäße Vorrichtung 110 kann kalibriert werden, indem das vorstehend beschriebene Verfahren mit einem Flachglas als Messobjekt durchgeführt wird.

Die Verknüpfung dieser Messdaten erlaubt im Verfahrensschritt 210 die Bestimmung einer flächigen Auswertung der Brechkraft der Linse 160 (so genannte "Power Map"). Damit ist es unter anderem möglich, auftragsgemäß in die Linse 160 eingearbeitete Prismen von Prismenfehlern zu unterscheiden. Dies trifft sowohl auf Prismenfehler zu, die bei der formgebenden Bearbeitung der Unterseite 162 der Linse 160 entstanden sind, als auch auf Prismenfehler, die aufgrund einer nicht korrekten Positionierung der Linse 160 in der Vorrichtung 110 detektiert werden.

Die oben beschriebenen Verfahren zur Bestimmung der räumlichen Lage der Linse 160 (Punkt 1) und zur Bestimmung ihrer Kenngrößen (Punkt 2) können auch deflektometrisch durchgeführt werden. Hierzu wird eine von einer Strahlungsquelle emittierten Strahlung verwendet, für welche die Linse 160 undurchlässig ist. Die Strahlungsquelle wird derart positioniert, dass die Linse 160 die von der Strahlungsquelle emittierte Strahlung in Richtung der Messachse M', also in Richtung des Kameraobjektivs 123 reflektiert, so dass die resultierende Reflexionsstrahlung vom Kameraobjektiv 123 erfasst und vom CCD-Sensor der Kamera 122 detektiert werden kann. Die Auswertung der resultierenden Messdaten erfolgt dann in an sich bekannter Weise.

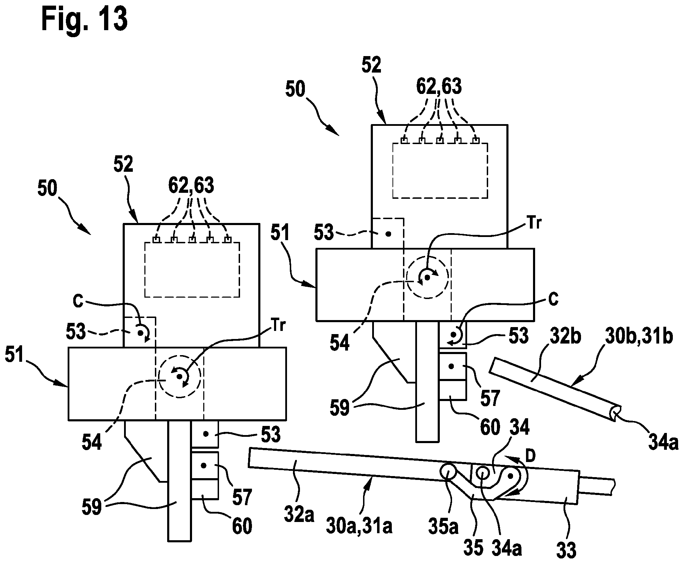

Die Fig. 12 und 13 zeigen in einer Draufsicht ein Ausführungsbeispiel von Fördereinrichtungen 30a, 30b, die vorzugsweise mit der Handhabungseinrichtung bzw. - vorrichtung 20 im Messbereich 10a und/oder den beiden Bearbeitungseinrichtungen 50 im Bearbeitungsbereich 10b der erfindungsgemäßen Vorrichtung 1, 1', 1", 1‴, 1ʺʺ zusammenwirken.

Die Fördereinrichtungen 30a, 30b sind im Ausführungsbeispiel als Linearförderer 31a, 31b ausgebildet und vorzugsweise an einem - nicht dargestellten - Tragrahmen der erfindungsgemäßen Vorrichtung 1, 1', 1", 1‴, 1ʺʺ befestigt.

Jeder Linearförderer 31a, 31b weist im Ausführungsbeispiel in an sich bekannter Weise eine Führungsschiene 32a, 32b zur Führung eines Schlittens 33 auf. Der Schlitten 33 ist im Ausführungsbeispiel pneumatisch angetrieben auf der Führungsschiene 32a, 32b in Richtung des Pfeils S (Fördereinrichtung 30a) bzw. in Richtung des Pfeils T (Fördereinrichtung 30b) bewegbar angeordnet. Der Schlitten 33 kann aber auch elektrisch angetrieben sein.

Auf dem Schlitten 33 sind vorzugsweise eine starre Halterung 34 mit einem ersten Greifer oder Sauger 34a und/oder eine um eine Schwenkachse D schwenkbare Halterung 35 mit einem zweiten Greifer oder Sauger 35a angeordnet.

Der erste Greifer oder Sauger 34a dient vorzugsweise zur Aufnahme der vermessenen und für die Randbearbeitung ausgerichteten Linse 16a, während der zweite Greifer oder Sauger 35a vorzugsweise zur Aufnahme der fertig randbearbeiteten Linse 16b dient.

Daher ist der erste Greifer oder Sauger 34a vorzugsweise in an sich bekannter Weise derart ausgeführt, dass er die fertig vermessene und für die Randbearbeitung ausgerichtete Linse 16a in ihrer jeweiligen Ausrichtung aufnehmen kann und dass diese Ausrichtung während des Transports der Linse 16a zur Bearbeitungseinrichtung 50 erhalten bleibt.

Der zweite Greifer oder Sauger 35a kann im Gegensatz hierzu einfach ausgestaltet sein, derart, dass er die fertig randbearbeitete Linse 16b in beliebiger Ausrichtung aufnehmen kann.

Die im Folgenden erwähnten Achsen x, y und z sind im Ausführungsbeispiel orthogonal zueinander orientiert, vorzugsweise wobei die x-Achse und die y-Achse horizontal und die z-Achse vertikal verlaufen (siehe auch Fig. 6a, 6b).

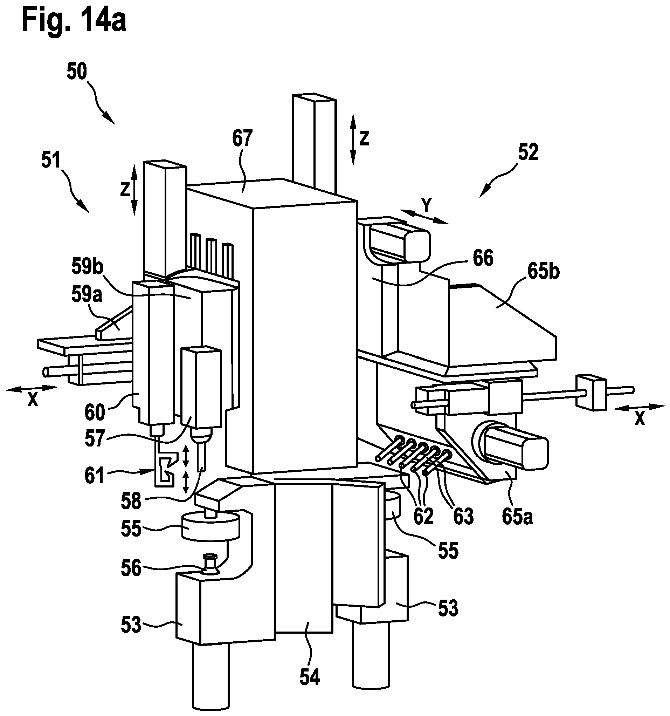

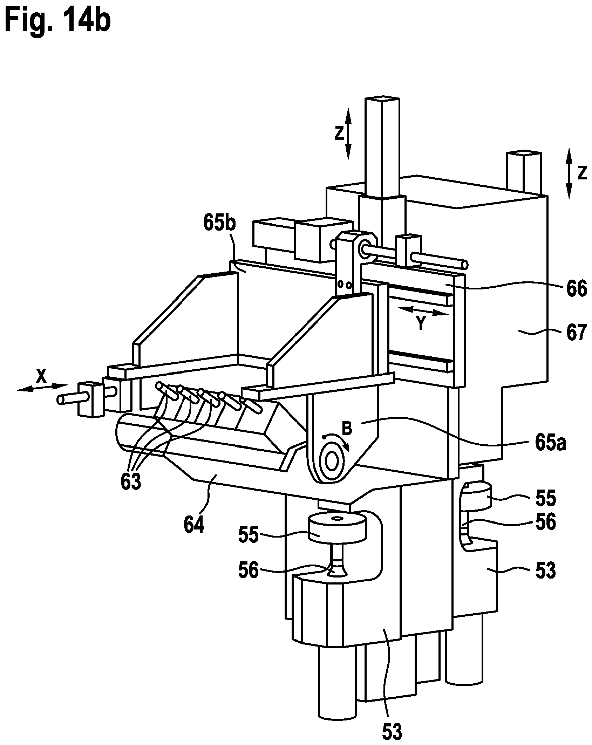

Die Fig. 13 bis 14b zeigen ein Ausführungsbeispiel einer erfindungsgemäßen Bearbeitungseinrichtung 50, die vorzugsweise zur Verwendung in der erfindungsgemäßen Vorrichtung 1, 1', 1", 1‴, 1ʺʺ und/oder zur Durchführung des erfindungsgemäßen Verfahrens geeignet ist. Im Ausführungsbeispiel sind zwei baugleiche erfindungsgemäße Bearbeitungseinrichtungen 50 vorgesehen.

Die beiden Bearbeitungseinrichtungen 50 sind im Ausführungsbeispiel an einem Traggestell (nicht dargestellt) befestigt, insbesondere beabstandet zur Wanne 68 bzw. zur Absaugöffnung 69, um einen störungsfreien Abfluss der Spanabfälle zu gewährleisten.

Jede Bearbeitungseinrichtung 50 weist vorzugsweise einen Grobbearbeitungsbereich 51 und einen Feinbearbeitungsbereich 52 auf, so dass zwei Linsen 16a gleichzeitig und/oder zeitüberlappend randbearbeitet werden können.

Die Bearbeitungseinrichtung 50 ist vorzugsweise zur gleichzeitigen Bearbeitung von Linsen im Grobbearbeitungsbereich 51 und Feinbearbeitungsbereich 52 ausgebildet.

Der Grobbearbeitungsbereich 51 dient im Ausführungsbeispiel zugleich auch als Ladebereich für zu bearbeitende Linsen 16a bzw. als Entladebereich für fertig randbearbeitete Linsen 16b.

Vorzugsweise sind in jeder Bearbeitungseinrichtung 50 zwei Werkstückspindeln bzw. einstückige Spindelgehäuse 53 vorgesehen.

Die beiden Werkstückspindeln bzw. einstückigen Spindelgehäuse 53 sind im Ausführungsbeispiel derart angeordnet, dass sie um eine Drehachse Tr im Ausführungsbeispiel um 180° drehbar sind.

Bevorzugt sind die Werkstückspindeln 53 bzw. einstückigen Spindelgehäuse 53 auf einer Dreheinrichtung 54 angeordnet, insbesondere versetzt zueinander.

Damit ist jede/s Werkstückspindel bzw. einstückige Spindelgehäuse 53 vom Grobbearbeitungsbereich 51 in den Feinbearbeitungsbereich 52 und zurück transferierbar angeordnet.

Die bevorzugt versetzte Anordnung der beiden Werkstückspindeln bzw. einstückigen Spindelgehäuse 53 hat zur Folge, dass der durch die Drehung um 180° definierte Radius ("Flugkreis") minimiert ist.

Mit anderen Worten weist die Bearbeitungseinrichtung 50 eine Spindeleinrichtung mit zwei Werkstückspindeln 53 auf, die insbesondere durch die einstückigen Spindelgehäuse 53 gebildet sind. Die Werkstückspindeln bzw. einstückigen Spindelgehäuse 53 sind vorzugsweise jeweils zum Halten einer Linse während einer Bearbeitung ausgebildet. Die Spindeleinrichtung mit den Werkstückspindeln 53 ist vorzugsweise drehbar, so dass die Werkstückspindeln 53 vom Grobbearbeitungsbereich 51 in den Feinbearbeitungsbereich 52 und umgekehrt bewegbar sind.

Vorzugsweise sind die Werkstückspindeln bzw. einstückigen Spindelgehäuse 53 in einem festen Abstand voneinander angeordnet.

Zum Wechsel der Werkstückspindeln 53 zwischen dem Grobbearbeitungsbereich 51 und dem Feinbearbeitungsbereich 52 ist die Spindeleinrichtung mit den Werkstückspindeln bzw. den einstückigen Spindelgehäuse 53 vorzugsweise um eine insbesondere vertikale Drehachse und/oder mittels der Dreheinrichtung 54 drehbar, insbesondere um 180°.

Jede/s Werkstückspindel bzw. einstückige Spindelgehäuse 53 weist vorzugsweise eine Werkstückspindel, insbesondere in Form von zwei Halbspindeln, nämlich einer oberen Halbspindel 55 und einer unteren Halbspindel 56, auf. Beide Halbspindeln 55, 56 sind im Ausführungsbeispiel in an sich bekannter Weise mittels eines Elektromotors über eine Synchronwelle mit zwei mit der Synchronwelle wirkverbundenen Riemen (nicht dargestellt) in gleicher Drehrichtung antreibbar ausgebildet. Die beiden Halbspindeln 55, 56 können bspw. aber auch mittels jeweils zugeordneter Elektromotoren (nicht dargestellt) in gleicher Drehrichtung antreibbar ausgebildet sein.

Damit ist eine vertikale Drehachse C definiert. Vorzugsweise ist die untere Halbspindel 56 im Gegensatz zum oberen Halbspindel 55 vertikal in Richtung der Achse z verschiebbar ausgebildet, so dass zwischen der oberen Halbspindel 55 und der unteren Halbspindel 56 eine zu bearbeitende Linse 16a auf ihren beiden Flächen klemmend gehalten werden kann (nicht dargestellt). Hierbei wirkt jeweils eine von der oberen Halbspindel 55 und der unteren Halbspindel 56 übertragene Haftkraft auf beide Oberflächen der zu bearbeitenden Linse 16a.

Jede Halbspindel 55, 56 weist ferner im Ausführungsbeispiel ein Haftelement (nicht dargestellt) auf, derart, dass die Oberflächen der zu bearbeitende Linse 16a zwischen den Haftelementen klemmend gehalten ist.

Die Haftelemente bestehen vorzugsweise aus einem elastischen Kunststoffmaterial, das sich den jeweiligen Oberflächenkonturen der Linse 16a anpasst. Hierbei ist es von Vorteil, wenn die Halbspindeln 55, 56, wie im Ausführungsbeispiel vorgesehen, in gleicher Richtung um die Drehachse C drehbar ausgebildet und separat antreibbar sind. Damit werden die von dem/den Elektromotor(en) übertragenen Drehmomente addiert, so dass eine besonders sichere Mitnahme der zu bearbeitenden Linse 16a während der Randbearbeitung erreicht wird.

Der Grobbearbeitungsbereich 51 weist im Ausführungsbeispiel ferner vorzugsweise genau eine Werkzeugspindel bzw. Werkzeugspindel-Einrichtung 57 zur Aufnahme genau eines Werkzeugs 58 zur spanabhebenden Randbearbeitung der jeweils zu bearbeitenden, insbesondere von den zugeordneten Halbspindeln 55, 56 gehaltenen Linse 16a auf.

Die Werkzeugspindel-Einrichtung 57 ist im Ausführungsbeispiel an einem x-Schlitten 59a und/oder einem z-Schlitten 59b derart gehalten, dass sie entlang einer vertikalen z-Achse und/oder einer horizontalen x-Achse bewegbar ist. Damit kann eine Zustellung des Werkzeugs 58 zur zu bearbeitenden Linse 16a in x-Richtung und/oder in z-Richtung erfolgen.

Die Werkzeugspindel-Einrichtung 57 weist im Ausführungsbeispiel also vorzugsweise keine Schwenkachse auf. Selbstverständlich können weitere Bewegungsachsen, einschließlich Schwenkachsen, zur Zustellung des Werkzeugs 58 vorgesehen sein.

Das Werkzeug 58 kann im Ausführungsbeispiel mit vergleichsweise geringer Längenabmessung ausgebildet sein, um Bearbeitungsfehler bspw. durch Eigenschwingungen oder Verbiegen des Werkzeugs 58 sowie das Risiko von Beschädigungen des Werkzeugs 58 zu minimieren.

Im Grobbearbeitungsbereich 51 ist vorzugsweise ferner eine Messeinrichtung 60 mit an sich bekannten Messtastern 61 vorgesehen. Die Messeinrichtung 60 ist vorzugsweise zusammen mit der Werkzeugspindel-Einrichtung 57 am x-Schlitten 59a und/oder am z-Schlitten 59b derart gehalten, dass sie, wie oben für die Werkzeugspindel-Einrichtung beschrieben, ebenfalls in x- Richtung und/oder in z-Richtung bewegbar ist, so dass die Zustellung des Messtasters 61 zur Linse 16a entsprechend erfolgen kann.

Die Messeinrichtung 60 dient zur Vermessung der näherungsweise randbearbeiteten Linse 16a vor dem Transfer in den Feinbearbeitungsbereich 52 der Bearbeitungseinrichtung 50.

Insbesondere wird die Position der oberen und unteren Flächen des nach der Grobbearbeitung verbliebenen Randbereichs der näherungsweise randbearbeiteten Linse 16a im Raum ermittelt.

Die Messtaster 61 bewegen sich hierbei auf den Oberflächen zwischen der erhaltenen Kontur der näherungsweise randbearbeiteten Linse 16a und der berechneten Kontur der erwünschten fertig bearbeiteten Linse 16b. Auf dieser Grundlage können die konkreten Fertigungsdaten für die Feinbearbeitung der näherungsweise randbearbeiteten Linse 16a ermittelt werden.

Anschließend erfolgt ihr Transfer in den Feinbearbeitungsbereich 52 und die abschließende Feinbearbeitung zur fertig bearbeiteten Linse 16b. Auf diese Weise wird eine möglichst genaue Feinbearbeitung zur fertig bearbeiteten Linse 16b ermöglicht.

Der Feinbearbeitungsbereich 52 weist vorzugsweise mehrere, im Ausführungsbeispiel fünf, vorzugweise unterschiedliche Werkzeuge 62 zur spanabhebenden Bearbeitung einer zu bearbeitenden Linse 16a auf.

Jedes Werkzeug 62 ist auf einer Werkzeugspindel 63 fest aufgenommen und vorzugsweise für eine einzige definierte Bearbeitungsaufgabe vorgesehen. Es können aber auch Kombinationswerkzeuge vorhanden sein, die für zwei oder mehr Bearbeitungsaufgaben vorgesehen sein können.

Die Werkzeuge 62 sind vorzugsweise derart ausgewählt, dass alle Linsenrandtypen (insbesondere für Brillen mit Vollfassungen, Halbfassungen und/oder für randlose Brillen) hergestellt werden können. Insbesondere sind verschiedene Werkzeuge 62 für unterschiedliche Bearbeitungsaufgaben vorgesehen.

Die Werkzeugspindeln 63 sind in einer Halteeinrichtung 64 in beliebiger Reihenfolge aufgenommen. Vorzugsweise sind die Werkzeugspindeln 63 derart aufgenommen, dass sie leicht auswechselbar und/oder in ihrer Reihenfolge veränderbar aufnehmbar sind.

Die Halteeinrichtung 64 ist vorzugsweise in einem x-Schlitten 65a um eine horizontal verlaufende Achse schwenkbar aufgenommen, womit eine Schwenkachse B definiert ist. Der x-Schlitten 65a ist wiederum entlang einer x-Achse bewegbar ausgebildet. Der x-Schlitten 65a ist vorzugsweise wiederum an einem y-Schlitten 65b gehalten, welcher entlang einer im rechten Winkel zur x-Achse verlaufenden y-Achse bewegbar ausgebildet ist.

Der y-Schlitten 65b ist schließlich vorzugsweise an einem z-Schlitten 66 gehalten, der entlang einer senkrecht zu der von der x-Achse und der y-Achse gebildeten Ebene angeordneten z-Achse bewegbar ausgebildet ist.

Im Ergebnis sind die Werkzeugspindeln 63 mit ihren Werkzeugen 62 vorzugsweise in allen drei Raumrichtungen x, y, z und zuzüglich um die Schwenkachse B bewegbar und damit der jeweiligen von den zugeordneten Halbspindeln 55, 56 gehaltenen zu bearbeitenden Linse 16a zustellbar ausgebildet.

Die Werkzeuge 62 können unabhängig voneinander zur Feinbearbeitung der zu bearbeitenden Linse 16a gewählt und der im zugeordneten einstückigen Spindelgehäuse 53 gehaltenen, bereit grob bearbeiteten Linse 16a mittels einer Linearbewegung in y-Richtung individuell zugestellt und anschließend mittels einer Schwenkbewegung um die Schwenkachse B in Eingriff mit der Linse 16a gebracht werden. Dies ermöglicht eine vollständige Randbearbeitung der zu bearbeitenden Linse 16a unter Erzeugung fertig randbearbeiteter Linsen 16b aller Größen und/oder mit unterschiedlichsten Randformen.

Dieser erfindungsgemäße Aufbau erlaubt ein Randbearbeiten der zu bearbeitenden Linse 16a mit unterschiedlichen Werkzeugen 62, wobei erfindungsgemäß vorzugsweise kein zeitaufwändiger Werkzeugwechsel stattfindet, sondern das jeweils benötigte Werkzeug 62 mittels einer Linearverschiebung und einer anschließenden Schwenkbewegung der Halteeinrichtung 64 der zu bearbeitenden Linse 16a zugestellt wird.

Da die Werkzeugspindeln 63 und damit die Werkzeuge 62 vorteilhafterweise in größtmöglicher räumlicher Nähe zueinander angeordnet sind (d.h. ohne dass sich die Werkzeuge 62 bei ihrer jeweiligen Zustellung zur zu bearbeitenden Linse 16a gegenseitig zu behindern), sind die Zustellwege für die Werkzeuge 62 sehr kurz, so dass die Zustellbewegungen selbst ebenfalls sehr schnell erfolgen kann.

Um eine weitere Zeitersparnis zu erzielen, können die Werkzeuge 62 bereits vor der Beendigung des vorhergehenden Randbearbeitungsschritts, d.h. vor ihrer Zustellung an die zu bearbeitenden Linse 16a aktiviert, d.h. in Rotationsbewegung versetzt werden.

Die erfindungsgemäße Vorrichtung 1, 1', 1", 1‴, 1ʺʺ weist im Ausführungsbeispiel eine integrierte Steuerung auf, und zwar für alle ansteuerbaren Komponenten der erfindungsgemäßen Vorrichtung 1, 1', 1", 1‴, 1ʺʺ, insbesondere für das Puffersystem 17, die Handhabungseinrichtung bzw. -vorrichtung 20, die mindestens eine Fördereinrichtung 30, die mindestens eine Messeinrichtung 40 und/oder die mindestens eine Bearbeitungseinrichtung 50.

Ein Ausführungsbeispiel des erfindungsgemäßen Verfahrens ist mit der soeben beschriebenen beispielhaften erfindungsgemäßen Vorrichtung durchführbar und weist vorzugsweise die folgenden Verfahrensschritte auf.

Vorzugsweise werden mittels des Förderbandes 12 Transportkisten 13 in den Bereich der erfindungsgemäßen Vorrichtung 1, 1', 1", 1 "', 1ʺʺ hinein transportiert.

Jede Transportkiste 13 enthält mindestens eine, zweckmäßigerweise zwei ihr zugeordnete, zu bearbeitende Linsen 16a, 16b, vorzugsweise wobei jede Transportkiste bspw. mit Identifizierungsdaten oder mit den Fertigungsdaten und/oder Gestelldaten 13a der ihr zugeordneten, zu bearbeitenden Linsen versehen ist.

Grundsätzlich sind die Linsen 16a, 16b und/oder Transportkisten 13 jedoch auch auf andere Weise zu der Vorrichtung 1, 1', 1", 1‴, 1ʺʺ transportierbar und von der Vorrichtung , 1', 1", 1‴, 1ʺʺ weg transportierbar.

Im Bereich des Pufferbandes 17a werden die Transportkisten 13 vorzugsweise nacheinander mittels des Schiebers 12a vom Transportband auf das Pufferband 17a geschoben.

Anschließend passiert jede Transportkiste 13 vorzugsweise zunächst ein Lesegerät 19, das die Identifizierungsdaten bzw. die Fertigungsdaten und/oder Gestelldaten 19 ausliest und an die Steuerung der Vorrichtung 1, 1', 1", 1‴, 1ʺʺ weitergibt.

Der Weitertransport jeder Transportkiste 13 auf dem Pufferband 17a in den Messbereich 10a der erfindungsgemäßen Vorrichtung 1, 1', 1", 1‴, 1ʺʺ hinein wird vorzugsweise durch Stoppvorrichtungen 18 kontrolliert, die in an sich bekannter Weise den Weitertransport jeder Transportkiste 13 abhängig von der Steuerung der Vorrichtung 1, 1', 1", 1‴, 1ʺʺ abschnittsweise erlauben.

Wenn eine Transportkiste 13 das Ende des Pufferbands 17a erreicht hat, kann sie auf das sich parallel zum Pufferband 17a erstreckende Pufferband 17b geschoben werden, bspw. in an sich bekannter Weise mittels eines Schiebers.

Der Weitertransport jeder Transportkiste 13 auf dem Pufferband 17b aus dem Messbereich 10a der erfindungsgemäßen Vorrichtung 1, 1', 1", 1‴, 1"" heraus wird vorzugsweise durch Stoppvorrichtungen 18 kontrolliert, die in an sich bekannter Weise mit einer Sperreinrichtung versehen sind und den Weitertransport jeder Transportkiste 13 abhängig von der Steuerung der Vorrichtung 1, 1', 1", 1 "', 1ʺʺ abschnittsweise erlauben.

Während dieses abschnittsweisen Transports der Transportkisten 13 werden die ihnen zugeordneten zu bearbeitenden Linsen 16a, insbesondere mittels der Handhabungseinrichtung bzw. -vorrichtung 20, aus den Transportkisten 13 entnommen und den weiteren Prozessen innerhalb der erfindungsgemäßen Vorrichtung 1, 1', 1", 1‴, 1ʺʺ zugeführt.

Die fertig randbearbeiteten Linsen 16b werden, insbesondere mittels der Handhabungseinrichtung bzw. -vorrichtung 20, wieder den ihnen zugeordneten Transportkisten 13 zugeführt und darin abgelegt.

Spätestens wenn eine Transportkiste 13 das Ende des Pufferbandes 17b im Bereich des Transportbandes 12 erreicht hat, ist sie mit den ihr zugeordneten, fertig randbearbeiteten Linsen 16b bestückt und wird mittels der nachrückenden Transportkisten 13 zurück auf das Transportband 12 geschoben und/oder aus dem Bereich der erfindungsgemäßen Vorrichtung 1, 1', 1", 1‴, 1ʺʺ hinaus transportiert.

Hierbei ist es vorzugsweise nicht erforderlich, dass die zu bearbeitenden Linsen 16a in der Reihenfolge der auf dem Pufferband 17a einlaufenden Transportkisten 13 entnommen werden.

Die Steuerung der erfindungsgemäßen Vorrichtung 1, 1', 1", 1‴, 1ʺʺ berechnet vorzugsweise die Reihenfolge der Entnahme der zu bearbeitenden Linsen 16a aus ihren Transportkisten 13 vielmehr derart, dass die zu bearbeitenden Linsen 16a abhängig von der Auslastung der mindestens einen Messeinrichtung 40 und/oder der mindestens einen Bearbeitungseinrichtung 50 ihren jeweiligen Transportkisten 13 entnommen werden. Das bedeutet, dass die zu bearbeitenden Linsen 16a in einer optimalen Geschwindigkeit, insbesondere ohne Wartezeiten, bspw. verursacht durch eine vorlaufende Linse 16a mit langer Mess- und/oder Bearbeitungsdauer, vermessen bzw. ausgerichtet und randbearbeitet werden können.

Sowohl die zu bearbeitenden Linsen 16a als auch die fertig randbearbeiteten Linsen 16b können vorzugsweise also unabhängig von der Position der ihr jeweils zugeordneten Transportkisten 13 auf den Pufferbändern 17a, 17b, ihren Transportkisten 13 entnommen bzw. in ihren Transportkisten abgelegt werden. Spätestens dann, wenn eine Transportkiste 13 das Ende des Pufferbandes 17b im Bereich des Transportbandes 12 erreicht hat, muss sie wieder mit den ihr zugeordneten fertig randbearbeiteten Linsen 16b bestückt sein.

Wie oben beschrieben, kann mittels eines dritten Transportbands (nicht dargestellt) eine zusätzliche Zirkulation der Transportkisten ermöglicht werden, um die Pufferwirkung der Pufferbänder 17a, 17b zu optimieren.

Nach der Entnahme einer zu bearbeitenden Linse 16a aus ihrer Transportkiste 13 wird diese von der Handhabungseinheit 20a zu demjenigen Messsystem 40 bzw. der jeweiligen Messeinrichtung 40 transportiert, welches bzw. welche zu diesem Zeitpunkt zur Verfügung steht. Die Linse 16a wird auf einem der jeweiligen Linsenhalterung 41 zugeordneten Ablagetisch mit ihrer konvexen Fläche nach oben abgelegt, so dass die Linse 16a in an sich bekannter Weise von den Klemmeinrichtungen der Linsenhalterung 41 fixiert und in die Messeinrichtung 40 transferiert werden kann, wie es bspw. in der WO 2016/095939 A1 beschrieben ist.

Die zu bearbeitende Linse 16a wird in an sich bekannter Weise vermessen.

Anschließend wird die vermessene Linse 16a vorzugsweise an ihrer konvexen Fläche am berechneten Blockpunkt von der Handhabungseinheit 20b aufgenommen und von den Klemmeinrichtungen der Linsenhalterung 41 gelöst.

Die zu bearbeitende Linse 16a wird dann in an sich bekannter Weise ausgerichtet, bspw. wie in der WO 2016/095939 A1 beschrieben.

Die Steuerung entscheidet nun vorzugsweise, welcher Fördereinrichtung 30a, 30b die vermessene und vorzugsweise ausgerichtete Linse 16a, insbesondere unter Erhalt ihrer Ausrichtung, übergeben wird. Dies ist vorzugsweise davon abhängig, welche der jeweiligen Fördereinrichtung 30a, 30b zugeordnete Bearbeitungseinrichtung 50 zu diesem Zeitpunkt neu bestückt werden kann.

Die ausgerichtete Linse 16a wird dementsprechend unter Erhalt ihrer Ausrichtung von der Handhabungseinheit 20b auf den Sauger/Greifer 34a der ausgewählten Fördereinrichtung transferiert, der sie nun vorzugsweise an ihrer konkaven Fläche greift.

Vorzugsweise, aber nicht zwingend zeitgleich greift die Handhabungseinheit 20a vom Sauger/Greifer 35a der ausgewählten Fördereinrichtung 30a, 30b eine von diesem an ihrer konkaven Fläche gehaltene fertig bearbeitete Linse 16b, nimmt diese vom Sauger/Greifer 35a ab und legt sie in der ihr zugeordneten Transportkiste 13 ab.

Jetzt bewegt sich der Schlitten 33 der ausgewählten Fördereinrichtung 30a, 30b entlang der Führungsschiene 32a, 32b aus dem Messbereich 10a der erfindungsgemäßen Vorrichtung 1, 1', 1", 1‴, 1ʺʺ, 1ʺʺ in ihren Bearbeitungsbereich 10b und passiert dabei vorzugsweise die Trennwand 11 durch die Öffnung 11a, 11b. Hierbei öffnet sich vorzugsweise die der jeweiligen Öffnung 11a, 11b zugeordnete Tür, so dass der Schlitten 33 die Öffnung 11a, 11b passieren kann.

Anschließend wird die Öffnung 11a, 11b von der ihr zugeordneten Tür vorzugsweise wieder verschlossen.

Wenn sich der Schlitten 33 in Höhe der Bearbeitungseinrichtung 50 im Grobbearbeitungsbereich 51 befindet, wird vorzugsweise eine fertig bearbeitete Linse 16b von einer Werkstückspindel bzw. einem einstückigen Spindelgehäuse 53 an die Fördereinrichtung 30a, 30b übergeben.

Insbesondere fährt hierzu der Sauger/Greifer 35a unter die obere Halbspindel 55 der Werkstückspindel bzw. des einstückigen Spindelgehäuses 53 und übernimmt die an der oberen Halbspindel 55 gehaltene fertig bearbeitete Linse 16b an ihrer konkaven Fläche. Anschließend klappt die schwenkbare Halterung 35 in Drehrichtung D weg, so dass der Sauger/Greifer 34a unter die obere Halbspindel 35 der Werkstückspindel bzw. des einstückigen Spindelgehäuses 53 fahren kann. Die zu bearbeitende Linse 16a wird unter Beibehaltung ihrer Ausrichtung von der oberen Halbspindel 55 übernommen und anschließend vom Sauger/Greifer 34a gelöst.

Nun entfernt sich der Schlitten 33 und transportiert die fertig bearbeitete Linse 16b zurück in den Messbereich 10a der erfindungsgemäßen Vorrichtung 1, 1', 1", 1‴, 1ʺʺ, wobei sie vorzugsweise wiederum wie oben beschrieben die Öffnung 11a, 11b in der Trennwand 11 passiert.

Die untere Halbspindel 56 des einstückigen Spindelgehäuses 53 fährt hoch, so dass die zu bearbeitende Linse 16a in ihrer vorgegebenen Orientierung fixiert wird und die Randbearbeitung beginnen kann.

Vorzugsweise zeitgleich während dieser Vorgänge wird eine weitere Linse 16a in dem auf der Feinbearbeitungsbereich 52 der Randbearbeitungsvorrichtung 50 befindlichen Spindelgehäuse 53 gehalten und fertig randbearbeitet. Dabei können die Werkzeugspindeln 63 bereits hochfahren, bevor die Linse 16a in den Feinbearbeitungsbereich 52 transferiert wird, um die Bearbeitungszeit so kurz wie möglich zu halten. Die Feinbearbeitung der zu bearbeitenden Linse 16a dauert in der Regel länger als ihre Grobbearbeitung.

Zweckmäßigerweise sind die Anzahl und/oder die Bauart und/oder die Reihenfolge der Werkzeuge 62 so gewählt, dass eine möglichst zeitsparende Randbearbeitung der zu bearbeitenden Linsen 16a erfolgen kann. Da die Werkzeuge 62 unterschiedlich weiten Zustellweg entlang der y-Achse haben, kann eine entsprechende Reihenfolge bzw. Anordnung in der Halterung 64 in einem insgesamt minimalen Verfahrweg der Halterung 64 resultieren, wodurch die Bearbeitungszeit wiederum verkürzt werden kann.

In der Ausgangsstellung des Schlittens 33 im Messbereich 10a der erfindungsgemäßen Vorrichtung 1, 1', 1", 1 "', 1ʺʺ greift die Handhabungseinheit 20a vom Sauger/Greifer 35a die von diesem auf der konkaven Seite gehaltene fertig bearbeitete Linse 16b, nimmt diese vom Sauger/Greifer 35a ab und legt sie in der ihr zugeordneten Transportkiste 13 ab. Direkt anschließend wird eine weitere vermessene und ausgerichtete zu bearbeitende Linse 16a unter Erhalt ihrer Ausrichtung auf den Sauger/Greifer 34a transferiert, der sie nun auf der konkaven Seite greift.

Diese weitere Linse 16a wird nun wie oben beschrieben in den Bearbeitungsbereich 10b der erfindungsgemäßen Vorrichtung 1, 1', 1", 1‴, 1ʺʺ transferiert.

Mittlerweile ist die zwischenzeitlich im Feinbearbeitungsbereich 52 der Bearbeitungseinrichtung 50 befindliche Linse 16b fertig randbearbeitet.

Durch Drehung der einstückigen Spindelgehäuse 53 wird die fertig bearbeitete Linse 16b in den Grobbearbeitungsbereich 51 der Bearbeitungseinrichtung 50 transferiert und die wie oben beschrieben fertig vorbearbeitete Linse 16a in den Feinbearbeitungsbereich 52 transferiert.

Während die Feinbearbeitung der Linse 16a beginnt, wartet die fertig bearbeitete Linse 16b auf ihre oben beschriebene Abholung durch den Schlitten 33. Der beschriebene Zyklus beginnt von vorn.

Somit können alle Messeinrichtungen 40, 110 in beliebiger Reihenfolge mit zu vermessenden Linsen 160 bzw. zu bearbeitenden Linsen 16a bestückt werden.

Ebenso kann jede Fördereinrichtung 30a, 30b in beliebiger Reihenfolge mit einer vermessenen und ausgerichteten zu bearbeitenden Linse 16a bestückt werden.

Ausgehend von den ggf. von der Leseeinrichtung 19 ausgelesenen und an die Steuerung der erfindungsgemäßen Vorrichtung 1, 1', 1", 1 "', 1ʺʺ übermittelten bzw. dort hinterlegten Fertigungsdaten und/oder Gestelldaten der zu bearbeitenden Linsen 16a berechnet die Steuerung vorzugsweise also sowohl die Reihenfolge, in der die Linsen 16a bearbeitet werden als auch die Auswahl der jeweiligen Messeinrichtung 40, 110 und der jeweiligen Fördereinrichtung 30a, 30b und der jeweiligen Bearbeitungseinrichtung 50 für jede einzelne zu bearbeitenden Linse 16a. Diese Berechnung erfolgt insbesondere derart, dass ein optimaler zeitlicher Ablauf der Vermessung, der Förderung und der Randbearbeitung der jeweiligen zu bearbeitenden Linse, insbesondere mit möglichst wenig Wartezeit, verwirklicht wird.

Eine für das nicht beanspruchte Verfahren geeignete Steuerung bzw. Kontrolleinrichtung ist insbesondere in der Lage, Bearbeitungsstati für die zu bearbeitenden Linsen 16a zu verwalten.

Die erforderlichen Vermessungs- und Bearbeitungsschritte für jede Linse 16a sind vorzugsweise in einem so genannten Bearbeitungsplan festgelegt.

Wenn mehrere Messeinrichtungen 40, 110 und/oder mehrere Bearbeitungseinrichtungen 50 vorgesehen sind, wird vorzugsweise für jede Linse 16a die konkret zu benutzende Messeinrichtung 40, 110 und/oder Bearbeitungseinrichtung 50 frei gewählt, d. h. unabhängig von jeder anderen vorhandenen Messeinrichtung 40, 110 und/oder Bearbeitungseinrichtung 50.

Die grundsätzliche Reihenfolge "Vermessung - Grobbearbeitung - Feinbearbeitung" bleibt dabei für jede Linse 16a unverändert.

Der tatsächliche Bearbeitungszustand jeder Linse 16a spiegelt sich im Bearbeitungsstatus wider. Der Bearbeitungsstatus gibt bspw. an, welche Vermessung bzw. Bearbeitung schon erfolgt ist oder als nächstes erfolgen soll, wobei dies besonders bevorzugt unter Verweis auf den entsprechenden Bearbeitungsplan für jede Linse 16a erfolgt.

Eine für das nicht beanspruchte Verfahren geeignete Steuerung bzw. Kontrolleinrichtung ist ferner vorzugsweise geeignet, für jede Linse 16a deren individuelle Messdauer in einer Messeinrichtung 40, 110 sowie individuelle Bearbeitungsdauer in einer Bearbeitungseinrichtung 50 zu verwalten und/oder die Belegungszeit für jede Messeinrichtung 40, 110 und Bearbeitungseinrichtung 50 zu bestimmen, d. h. denjenigen Zeitraum, während dessen die jeweilige Messeinrichtung 40, 110 und die jeweilige Bearbeitungseinrichtung 50 von der betreffenden Linse 16a blockiert ist.

Davon ausgehend kann die Steuerung bzw. Kontrolleinrichtung die Reihenfolge der Vermessung und Bearbeitung der Linsen 16a festlegen. Die Festlegung erfolgt zum einen vorzugsweise derart, dass die Vermessungseinrichtung(en) 40, 110 und die Bearbeitungseinrichtung(en) 50 möglichst ohne Totzeiten betrieben werden können. Die Festlegung erfolgt zum anderen besonders bevorzugt derart, dass die Reihenfolge der Vermessung und Bearbeitung der Linsen 16a unabhängig davon bestimmt wird, in welcher Reihenfolge ihre jeweiligen Transportkisten auf den Pufferbändern 17a, 17b angeordnet sind.

Insbesondere mit einer derartigen Steuerung bzw. Kontrolleinrichtung können gemäß dem oben beschriebenen Ausführungsbeispiel des erfindungsgemäßen Verfahrens die Handhabungseinrichtung bzw. -vorrichtung 20 und die Fördereinrichtungen 30a, 30b derart betrieben werden, dass die beiden Messeinrichtungen 40, 110 unabhängig voneinander angesteuert, mit einer zu vermessenden Linse beladen und von einer vermessenen Linse entladen werden.

In vergleichbarer Weise können die beiden Bearbeitungseinrichtungen 50 unabhängig voneinander angesteuert, mit einer zu bearbeitenden Linse 16a beladen bzw. von einer fertig randbearbeiteten Linse 16b entladen werden.

Die Vermessung und Randbearbeitung zu bearbeitender Linsen 16a kann somit erfindungsgemäß derart erfolgen, dass einfach und komplex zu bearbeitende Linsen 16a optimal auf die Messeinrichtungen 40 bzw. Bearbeitungseinrichtungen 50 verteilt werden können, so dass sie mit möglichst geringem Zeitaufwand bzw. Zeitverlust vermessen bzw. fertig randbearbeitet werden können.

Zu diesem Zweck verfügt die Steuerung der erfindungsgemäßen Vorrichtung über die jeweiligen Fertigungs- bzw. Gestelldaten der zu bearbeitenden Linsen 16a. Die Handhabungseinrichtung bzw. -vorrichtung 20 und/oder die Fördereinrichtungen 30a, 30b können somit derart angesteuert werden, dass die zu bearbeitenden Linsen 16a in optimaler Weise auf freie Messeinrichtungen 40 und/oder Fördereinrichtungen 30a, 30b und/oder Bearbeitungseinrichtungen 50 verteilt werden, um eine möglichst zeitsparende Vermessung und/oder Randbearbeitung zu erzielen.

Die hierzu erforderlichen Linsendaten, bspw. Bearbeitungsdaten, Bearbeitungspläne, Bearbeitungsreihenfolgen, Bearbeitungsschritte, optische Daten und/oder geometrische Daten, sind entweder in der Steuerung bzw. Kontrolleinrichtung mittels eines Speichermediums hinterlegt und/oder werden wie oben beschrieben beim Einlaufen der jeweiligen Transportkiste 13 aus den Datenträgern 13a ausgelesen.

Die Erfassung der jeweiligen Bearbeitungsstati der einzelnen in der erfindungsgemäßen Vorrichtung befindlichen Linsen 16a, 16b dient also der Steuerung, Koordinierung und Organisation des Ablaufs der einzelnen Mess- und Bearbeitungsprozesse in den jeweiligen Messeinrichtung(en) 40, 110 und Bearbeitungseinrichtung(en) 50.

Diese Bearbeitungsstati können alternativ oder zusätzlich an ein externes Überwachungssystem oder Control Center übermittelt, von diesem gespeichert und/oder einer Bedienperson angezeigt werden. Damit kann bspw. für jede einzelne Linse 16a, 16b erfasst und gespeichert werden, in welcher Messeinrichtung 40, 110 sie vermessen und in welcher Bearbeitungseinrichtung 50 sie bearbeitet wurde. Eine derartige Datenerfassung kann insbesondere bei einer Fehlersuche und/oder Fehlerbehebung nützlich sein, falls eine fertig bearbeitete Linse 16b nicht den ihr zugeteilten Fertigungs- und/oder Gestelldaten entsprechen sollte.

In vergleichbarer Weise können aber auch die jeweiligen Arbeitszustände des Pufferbereichs 17, der Handhabungseinrichtung(en) bzw. -vorrichtung(en) 20, der Messeinrichtung(en) 40, 110, der Fördereinrichtung(en) 30a, 30b und/oder der Bearbeitungseinrichtung(en) 50 an ein derartiges Überwachungssystem übermittelt, von diesem gespeichert und/oder einer Bedienperson angezeigt werden. Als Arbeitszustände können, je nach Anforderung des Einzelfalls, bspw. "ein", "aus", betriebsbereit", "auf Linse wartend", "Linse bearbeitend", "Linse abgabefertig", "Anzahl der Bewegungen", "Anzahl der vermessenen Linsen", "Anzahl der bearbeiteten Linsen", "Standzeit", "Wartung erforderlich", "Werkzeugwechsel erforderlich", "Störung", usw. definiert werden. Auf diese Weise können insbesondere der Zustand, die Auslastung und das effiziente Arbeiten der erfindungsgemäßen Vorrichtung besonders einfach überprüft und ggf. entsprechende Maßnahmen wie Werkzeugwechsel, Reparatur, Optimierung der Zeitabläufe usw. ergriffen werden.

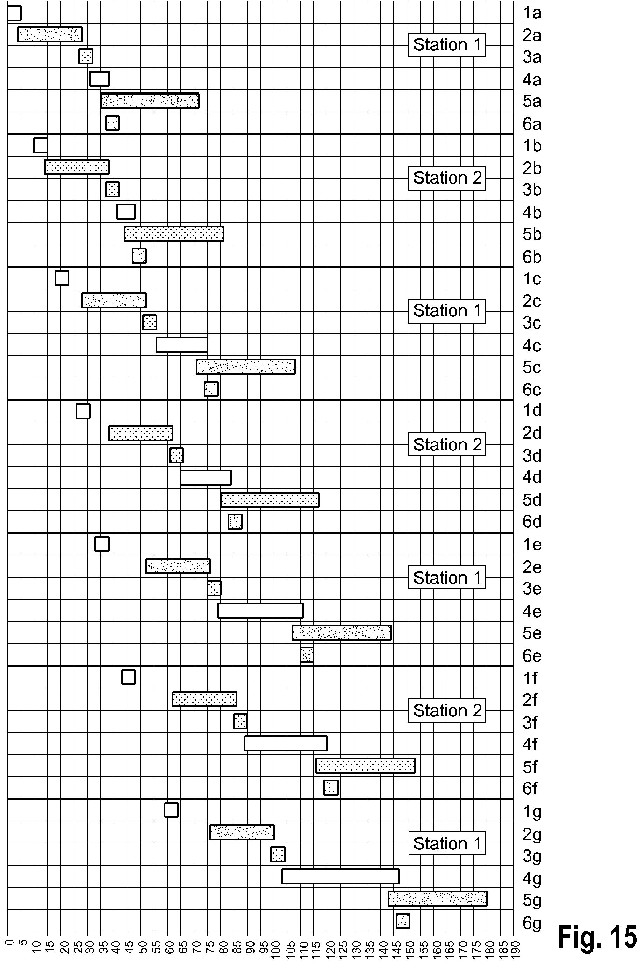

Die folgenden Tabellen 1 und 2 zeigen in Verbindung mit Fig. 15 eine beispielhafte Zeitplanung für das erfindungsgemäße Verfahren in einer erfindungsgemäßen Vorrichtung insgesamt (Tabelle 1) sowie für jeden Vorgang einzeln (Tabelle 2). Die Zeitangaben verstehen sich jeweils in Sekunden.

Die Fig. 15 stellt insbesondere eine graphische Darstellung bzw. Wiedergabe der in Tabelle 1 aufgeführten Vorgänge 1a-6g dar. Beispielhaft ist in Fig. 15 die gleichzeitige Bearbeitung in zwei Stationen dargestellt, wobei die in Fig. 15 als "Station 1" und "Station 2" bezeichneten Stationen zwei insbesondere baugleichen Bearbeitungseinrichtungen 50 entsprechen.

**Tabelle 1**

| **Vorgang** | | **Start** | **Zeit** | **Ende** |
|---|---|---|---|---|
| 1a | Übergabe Pufferbereich 17 -> Messeinrichtung 40, 110 | 0 | 5 | 5,0 |
| 2a | Eine Messeinrichtung 40 ,110 | 4 | 24,0 | 28,0 |
| 3a | Übergabe Messeinrichtung 40, 110 -> Fördereinrichtung 30a, 30b | 27 | 5,0 | 32,0 |
| 4a | Eine Fördereinrichtung 30a, 30b | 31 | 7,0 | 38,0 |
| 5a | Eine Bearbeitungsvorrichtung 50 | 35 | 37,0 | 72,0 |
| 6a | Übergabe Fördereinrichtung 30a, 30b -> Pufferbereich 17 | 37 | 5,0 | 42,0 |
| 1b | Übergabe Pufferbereich 17 -> Messeinrichtung 40, 110 | 10,0 | 5,0 | 15,0 |
| 2b | Eine Messeinrichtung 40 ,110 | 14 | 24,0 | 38,0 |
| 3b | Übergabe Messeinrichtung 40, 110 -> Fördereinrichtung 30a, 30b | 37 | 5,0 | 42,0 |
| 4b | Eine Fördereinrichtung 30a, 30b | 41 | 7,0 | 48,0 |
| 5b | Eine Bearbeitungsvorrichtung 50 | 44 | 37,0 | 81,0 |
| 6b | Übergabe Fördereinrichtung 30a, 30b -> Pufferbereich 17 | 47 | 5,0 | 52,0 |
| 1c | Übergabe Pufferbereich 17 -> Messeinrichtung 40, 110 | 18 | 5 | 23,0 |
| 2c | Eine Messeinrichtung 40 ,110 | 28 | 24,0 | 52,0 |
| 3c | Übergabe Messeinrichtung 40, 110 -> Fördereinrichtung 30a, 30b | 51 | 5,0 | 56,0 |
| 4c | Eine Fördereinrichtung 30a, 30b | 56 | 19,0 | 75,0 |
| 5c | Eine Bearbeitungsvorrichtung 50 | 71 | 37,0 | 108,0 |
| 6c | Übergabe Fördereinrichtung 30a, 30b -> Pufferbereich 17 | 74 | 5,0 | 79,0 |
| 1d | Übergabe Pufferbereich 17 -> Messeinrichtung 40, 110 | 26 | 5,0 | 31,0 |
| 2d | Eine Messeinrichtung 40 ,110 | 38 | 24,0 | 62,0 |
| 3d | Übergabe Messeinrichtung 40, 110 -> Fördereinrichtung 30a, 30b | 61 | 5,0 | 66,0 |
| 4d | Eine Fördereinrichtung 30a, 30b | 65 | 19,0 | 84,0 |
| 5d | Eine Bearbeitungsvorrichtung 50 | 80 | 37,0 | 117,0 |
| 6d | Übergabe Fördereinrichtung 30a, 30b -> Pufferbereich 17 | 83 | 5,0 | 88,0 |
| 1e | Übergabe Pufferbereich 17 -> Messeinrichtung 40, 110 | 33 | 5 | 38,0 |
| 2e | Eine Messeinrichtung 40 ,110 | 52 | 24,0 | 76,0 |
| 3e | Übergabe Messeinrichtung 40, 110 -> Fördereinrichtung 30a, 30b | 75 | 5,0 | 80,0 |
| 4e | Eine Fördereinrichtung 30a, 30b | 79 | 32,0 | 111,0 |
| 5e | Eine Bearbeitungsvorrichtung 50 | 107 | 37,0 | 144,0 |
| 6e | Übergabe Fördereinrichtung 30a, 30b -> Pufferbereich 17 | 110 | 5,0 | 115,0 |
| 1f | Übergabe Pufferbereich 17 -> Messeinrichtung 40, 110 | 43 | 5,0 | 48,0 |
| 2f | Eine Messeinrichtung 40 ,110 | 62 | 24,0 | 86,0 |
| 3f | Übergabe Messeinrichtung 40, 110 -> Fördereinrichtung 30a, 30b | 85 | 5,0 | 90,0 |
| 4f | Eine Fördereinrichtung 30a, 30b | 89 | 31,0 | 120,0 |
| 5f | Eine Bearbeitungsvorrichtung 50 | 116 | 37,0 | 153,0 |
| 6f | Übergabe Fördereinrichtung 30a, 30b -> Pufferbereich 17 | 119 | 5,0 | 124,0 |
| 19 | Übergabe Pufferbereich 17 -> Messeinrichtung 40, 110 | 59 | 5 | 64,0 |
| 2g | Eine Messeinrichtung 40 ,110 | 76 | 24,0 | 100,0 |
| 3g | Übergabe Messeinrichtung 40, 110 -> Fördereinrichtung 30a, 30b | 99 | 5,0 | 104,0 |
| 4g | Eine Fördereinrichtung 30a, 30b | 103 | 44,0 | 147,0 |
| 5g | Eine Bearbeitungsvorrichtung 50 | 143 | 37,0 | 180,0 |
| 6g | Übergabe Fördereinrichtung 30a, 30b -> Pufferbereich 17 | 146 | 5,0 | 151,0 |

Hierbei wurde für jede Übergabe eine jeweilige Dauer von 1 Sekunde angenommen.

**Tabelle 2**

| **Vorgang** | **Zeit [s]** |
|---|---|
| **1 Übergabe Pufferbereich 17 -> Messeinrichtung 40, 110** | **Σ 5** |
| Greifen/Ansaugen einer Linse 16a | 1 |
| Anheben der Linse 16a (Z-Hub) | 1 |
| Transport zu einer Messeinrichtung 40, 110 | 2 |
| Ablegen der Linse 16a in der Messeinrichtung 40, 110 | 1 |

| 2 **Eine Messeinrichtung 40 ,110** | **Σ 24** |
|---|---|
| | **12** |
| | 12 |

| **3 Übergabe Messeinrichtung 40, 110 -> Fördereinrichtung 30a, 30b** | **Σ 5** |
|---|---|
| Greifen/Ansaugen der vermessenen Linse 16a | 1 |
| Anheben der vermessenen Linse 16a (Z-Hub) | 2 |
| Transport zu einer Fördereinrichtung 30a, 30b | 1 |
| Ablegen der Linse 16 auf Greifer/Sauger 34a | 1 |

| **Vorgang** | **Zeit [s]** |
|---|---|
| **4 Eine Fördereinrichtung 30a, 30b** | **Σ 7** |
| Übernehmen der vermessenen Linse 16a | 1 |
| Transport der vermessenen Linse 16a zur Bearbeitungsvorrichtung 50 | 1 |
| Aufnehmen einer fertig bearbeiteten Linse 16b auf Greifer/Sauger 35a | 1 |
| Wegschwenken des Greifers/Saugers 35a | 0,5 |
| Einfahren der vermessenen Linse 16a in den Grobbearbeitungsbereich 51 | 0,5 |
| Übergabe der vermessenen Linse 16a | 1 |
| Transport der fertig bearbeiteten Linse 16b in den Messbereich 10a | 1 |
| Übergabe der fertig bearbeiteten Linse 16b an die Handhabungsvorrichtung 20a | 1 |

| **5 Eine Bearbeitungsvorrichtung** | Σ **37** |
|---|---|
| Übernahme der Linse 16a | 1 |
| V-Bevel | 22 |
| Safety Bevel | 12 |
| Drehen | 1 |
| Übergabe der fertig bearbeiteten Linse 16b an Greifer/Sauger 35a | 1 |

| **6 Übergabe Fördereinrichtung 30a, 30b -> Pufferbereich 17** | Σ 5 |
|---|---|
| Greifen/Ansaugen der fertig bearbeiteten Linse 16b | 1 |
| Anheben der fertig bearbeiteten Linse 16b (Z-Hub) | 1 |
| Transport der fertig bearbeiteten Linse zum Pufferbereich 17 | 1 |
| Absenken der fertig bearbeiteten Linse 16b (Z-Hub) | 1 |
| Ablegen der fertig bearbeiteten Linse 16b in zugeordneter Transportkiste 13 | 1 |

Die erfindungsgemäße Vorrichtung 1, 1', 1", 1‴, 1ʺʺ bzw. das erfindungsgemäße Verfahren erlauben also vorzugsweise die Randbearbeitung von Linsen mit einem Durchsatz von mindestens 100 Linsen pro Stunde. Insbesondere in Kombination mit der erfindungsgemäßen Bearbeitungseinrichtung 50 kann ein Durchsatz von bis zu 250 Linsen pro Stunde erreicht werden.

### Bezugszeichenliste:

1 1', 1", 1‴, 1ʺʺ Vorrichtung
10 10ʺʺ Gehäuse
10a Messbereich
10b Bearbeitungsbereich
11 Trennwand zwischen 10a und 10b
11a, 11b Öffnungen in 11
12 externes Förderband (Transportkisten)
12a Schieber an 12
13 Transportkisten (Linsen)
13a Datenträger an 13 mit Fertigungsdaten und/oder Gestelldaten
14 Schwenkarm
14a Bedieneinheit
15 Schaltschrank
16a zu bearbeitende Linsen
16b randbearbeitete Linsen
17 Pufferbereich
17a Pufferband, hereinlaufend
17b Pufferband, herauslaufend
18 Stoppvorrichtungen
19 Lesegerät
20 Handhabungseinrichtung bzw. -vorrichtung in 10a
20a erste Handhabungseinheit von 20
21 erste Schiene von 20a
21a, 21b Führungen von 20a
22 zweite Schiene von 20a
23 Greifvorrichtung von 20a
24 Greifer oder Sauger von 20a
20b zweite Handhabungseinheit von 20
25 erste Schiene von 20b
26 zweite Schiene von 20b
27 Greifvorrichtung von 20b
28 Greifer oder Sauger von 20b
29a, b, c, d E-Motoren
30a, 30b Fördereinrichtung
31a, 31b Linearförderer
32a, 32b Führungsschiene
33 Schlitten
34 starre Halterung
34a Greifer oder Sauger
35 schwenkbare Halterung
35a Greifer oder Sauger
36
37
38
39
40 Messeinrichtung
41 Linsenhalterung
41a Rahmen von 41
42 Messtisch
43
44
45
46
47
48
49
50 Bearbeitungseinrichtung
51 Grobbearbeitungsbereich
52 Feinbearbeitungsbereich
53 Werkstückspindel / Einstückiges Spindelgehäuse
54 Dreheinrichtung von 53
55 Halbspindel oben
56 Halbspindel unten
57
Werkzeugspindeleinrichtung v. 51
58 Werkzeug von 57
59 Traggestell
59a x-Schlitten
59b z-Schlitten
60 Messeinrichtung
61 Messtaster von 60
62 Werkzeuge in 52
63 Werkzeugspindeln für 62
64 Halteeinrichtung für 63
65a x-Schlitten
65b y-Schlitten
66 z -Schlitten
67 Gehäuse
68 Wanne
69 Absaugöffnung
Pfeil E Eintritt Transportkisten
Pfeil R Rücktransport Transportkisten
Pfeil L
Pfeil M Bewegungsrichtungen von 20a
Pfeil N
Pfeil O
Pfeil P Bewegungsrichtungen von 20b
Pfeil Q
Pfeil S Förderrichtung von 30a
Pfeil T Förderrichtung von 30b
Drehrichtung D von 34a, 35a
Drehrichtung Tr von 53
110 Messeinrichtung
111 Haltetisch
112 Unterseite von 111
113 Oberseite von 111
114 Ausnehmung
115 Halteelement
116 Antriebseinheit
117 Zahnstange
118 Motor
119
120 Mess-/Detektionseinrichtung
121 Halterung von 120
122 Kamera
123 Kameraobjektiv
124 Motor
125 Öffnung in 121
126
127
128
129
130 Greifeinheit
131 Halteplatte
132 Führungsplatte
133a Führungsschuh
133b Führungsschiene
134 Greifeinrichtung
135 Greifelemente
136 pneum. Zylinderantrieb f. 135
137 Ablagetisch
138 Haltearm von 137
139 Lager- u. Schwenkvorr. f. 138
139` Antriebszylinder für 139
140 erste Strahlungsquelle
140a,b Gruppen von 140
140` weitere Strahlungsquelle
141 Laserdioden
142 Leitungen
143' Maske
144 Greif- und Zentrieranordnung
145 Paar von Greifeinrichtungen 134
146 Dreheinrichtung
147 Verstelleinrichtung
148
149
150 zweite Strahlungsquelle
151 Aufnahmeplatte
152
153
154
155
156
157
158
159
160 zu vermessende/zu bearbeitende Linse
160' Beschichtung von 160
161 Oberseite von 160
162 Unterseite von 160
163 Rand von 160
164
165
166
167
168
169
170 Auswertungseinrichtung
201-210 Verfahrensschritte
Z' Bewegungsachse (z-Achse)
M' Messachse
S' Schwenkachse
D' Drehachse
B Schwenkachse

## Patentansprüche

1. Vorrichtung (1, 1', 1", 1‴, 1ʺʺ) zur Linsenbearbeitung, mit mindestens einer Aufnahmeeinrichtung für mindestens eine Transportkiste (13), mit mindestens einer Messeinrichtung (40, 110), und mindestens einer Bearbeitungseinrichtung (50),
wobei die Vorrichtung (1, 1', 1", 1‴, 1ʺʺ) ein Gehäuse (10) aufweist, welches im Wesentlichen in einen Messbereich (10a) und einen Bearbeitungsbereich (10b) unterteilt ist, wobei der Messbereich (10a) die mindestens eine Messeinrichtung (40, 110) aufweist und der Bearbeitungsbereich (10b) die mindestens eine Bearbeitungseinrichtung (50) aufweist,
wobei zwischen der mindestens einen Messeinrichtung (40, 110) und der mindestens einen Bearbeitungseinrichtung (50) mindestens eine Fördereinrichtung (30a, 30b) vorgesehen ist, wobei zwischen der mindestens einen Aufnahmeeinrichtung, der mindestens einen Messeinrichtung (40, 110) und der mindestens einen Fördereinrichtung (30a, 30b) mindestens eine Handhabungseinrichtung (20) vorgesehen ist, derart, dass die mindestens eine Messeinrichtung (40, 110), die mindestens eine Fördereinrichtung (30a, 30b) und die mindestens eine Bearbeitungseinrichtung (50) in beliebiger Anzahl und/oder Orientierung zueinander angeordnet bzw. anordenbar sind, und
wobei die Übergabe von zu bearbeitenden Linsen (16a, 160) aus ihren Transportkisten (13) in eine frei wählbare Messeinrichtung (40, 110), von der Messeinrichtung (40, 110) auf eine frei wählbare Fördereinrichtung (30a, 30b) sowie die Übergabe von fertig bearbeiteten Linsen (16b) von der jeweiligen Fördereinrichtung (30a, 30b) zurück in ihre Transportkisten (13) über die Handhabungseinrichtung (20) erfolgt.

2. Vorrichtung nach Anspruch 1, **dadurch gekennzeichnet, dass** mindestens zwei Bearbeitungseinrichtungen (50) vorgesehen sind.

3. Vorrichtung nach Anspruch 1 oder 2, **dadurch gekennzeichnet, dass** mindestens zwei Messeinrichtungen (40, 110) vorgesehen sind.

4. Vorrichtung nach einem der vorhergehenden Ansprüche, **dadurch gekennzeichnet, dass** baugleiche Messeinrichtungen (40, 110) und/oder baugleiche Bearbeitungseinrichtungen (50) vorgesehen sind.

5. Vorrichtung nach einem der vorhergehenden Ansprüche, **dadurch gekennzeichnet, dass** die mindestens eine Messeinrichtung (40, 110) zur berührungslosen Vermessung mittels Deflektometrie, Transmissionsstrahlung und/oder Lumineszenzstrahlung ausgebildet ist.

6. Vorrichtung nach einem der vorhergehenden Ansprüche, **dadurch gekennzeichnet, dass** die Handhabungseinrichtung (20) eine erste Handhabungseinheit (20a) für den Transfer der Linsen (16a, 160) aus mindestens einer Transportkiste (13) in die mindestens eine Messeinrichtung (40, 110) und von der mindestens einen Fördereinrichtung (30a, 30b) in die mindestens ein Transportkiste (13) aufweist, und/oder dass die Handhabungseinrichtung (20) eine zweite Handhabungseinheit (20b) für den Transfer der Linsen (16a, 160) von der mindestens einen Messeinrichtung (40, 110) zu der mindestens einen Fördereinrichtung (30a, 30b) aufweist.

7. Vorrichtung nach einem der vorhergehenden Ansprüche, **dadurch gekennzeichnet, dass** die mindestens eine Aufnahmeeinrichtung einen Pufferbereich (17) bildet.

8. Vorrichtung nach einem der vorhergehenden Ansprüche, **dadurch gekennzeichnet, dass** ein Aufnahmebereich in einem Messbereich (10a) vorgesehen ist und/oder dass die mindestens eine Fördereinrichtung (30a, 30b) sich über mindestens einen Messbereich (10a) und/oder mindestens einen Bearbeitungsbereich (10b) erstreckt.

9. Vorrichtung nach einem der vorhergehenden Ansprüche, **dadurch gekennzeichnet, dass** mindestens ein Messbereich (10a) und mindestens ein Bearbeitungsbereich (10b) durch eine Trennwand (11) voneinander abgegrenzt sind.

10. Vorrichtung nach Anspruch 9, **dadurch gekennzeichnet, dass** mindestens eine Fördereinrichtung (30a, 30b) durch jeweils eine Öffnung (11a, 11b) in der Trennwand (11) hindurchtritt.

11. Vorrichtung nach Anspruch 10, **dadurch gekennzeichnet, dass** die Öffnungen (11a, 11b) mit Türen versehen sind, die die Öffnungen (11a, 11b) vor dem Durchtritt einer von einer Fördereinrichtung (30a, 30b) transportierten Linse (16a, 16b, 160) freigeben und nach dem Durchtritt wieder verschließen.

12. Vorrichtung nach einem der vorhergehenden Ansprüche, **dadurch gekennzeichnet, dass** die mindestens eine Fördereinrichtung (30a, 30b) dazu ausgebildet ist, die vermessenen und ausgerichteten zu bearbeitenden Linsen (16a, 160) unter Beibehaltung ihrer räumlichen Orientierung vom Messbereich (10a) in den Bearbeitungsbereich (10b) der Vorrichtung (1, 1', 1", 1‴, 1ʺʺ) zu transportieren.

13. Vorrichtung nach einem der vorhergehenden Ansprüche, **dadurch gekennzeichnet, dass** die mindestens eine Fördereinrichtung (30a, 30b) als Linearförderer (31a, 31b) ausgebildet ist.

14. Vorrichtung nach Anspruch 13, **dadurch gekennzeichnet, dass** der Linearförderer (31a, 31b) eine Führungsschiene (32a, 32b) zur Führung eines Schlittens (33) aufweist, wobei der Schlitten (33) bewegbar auf der Führungsschiene (32a, 32b) angeordnet ist.

15. Vorrichtung nach Anspruch 14, **dadurch gekennzeichnet, dass** auf dem Schlitten (33) eine starre Halterung (34) mit einem ersten Greifer oder Sauger (34a) und eine um eine Schwenkachse (S') schwenkbare Halterung (35) mit einem zweiten Greifer oder Sauger (35a) angeordnet sind, insbesondere wobei der erste Greifer oder Sauger (34a) zur Aufnahme der vermessenen und für die Randbearbeitung ausgerichteten Linse (16a, 160) dient und derart ausgeführt ist, dass er die fertig vermessene und für die Randbearbeitung ausgerichtete Linse (16a, 160) in ihrer jeweiligen Ausrichtung aufnehmen kann und dass diese Ausrichtung während des Transports der Linse (16a, 160) zur Bearbeitungseinrichtung (50) erhalten bleibt, während der zweite Greifer oder Sauger (35a) zur Aufnahme der fertig randbearbeiteten Linse (16b) dient.

## Claims

1. Apparatus (1, 1', 1", 1‴, 1ʺʺ) for lens processing, with at least one receiving device for at least one transport box (13), with at least one measuring device (40, 110), and at least one processing device (50),
wherein the apparatus (1, 1', 1", 11‴, 1ʺʺ) has a housing (10) which is essentially subdivided into a measuring area (10a) and a processing area (10b), wherein the measuring area (10a) has the at least one measuring device (40, 110) and the processing area (10b) has the at least one processing device (50),
wherein at least one conveying device (30a, 30b) is provided between the at least one measuring device (40, 110) and the at least one processing device (50), at least one handling device (20) being provided between the at least one receiving device, the at least one measuring device (40, 110) and the at least one conveying device (30a, 30b) in such a way that the at least one measuring device (40, 110), the at least one conveying device (30a, 30b) and the at least one processing device (50) are arranged or can be arranged in any number and/or orientation with respect to one another, and
wherein the transfer of the lenses (16a, 160) to be processed from their transport boxes (13) to a freely selectable measuring device (40, 110), from the measuring device (40) to a freely selectable conveying device (30a, 30b), as well as the transfer of finished processed lenses (16b) from the respective conveying device (30a, 30b) back to their transport boxes (13) is carried out via the handling device (20).

2. Apparatus according to claim 1, **characterized in that** at least two processing devices (50) are provided.

3. Apparatus according to claim 1 or 2, **characterized in that** at least two measuring devices (40, 110) are provided.

4. Apparatus according to any one of the preceding claims, **characterized in that** identically constructed measuring devices (40, 110) and/or identically constructed processing devices (50) are provided.

5. Apparatus according to any one of the preceding claims, **characterized in that** the at least one measuring device (40, 110) is designed for contactless measurement by means of deflectometry, transmission radiation and/or luminescence radiation.

6. Apparatus according to any one of the preceding claims, **characterized in that** the handling device (20) has a first handling unit (20a) for transferring the lenses (16a, 160) from at least one transport box (13) into the at least one measuring device (40, 110) and from the at least one conveying device (30a, 30b) into the at least one transport box (13), and/or that the handling device (20) comprises a second handling unit (20b) for the transfer of the lenses (16a, 160) from the at least one measuring device (40, 110) to the at least one conveying device (30a, 30b).

7. Apparatus according to any one of the preceding claims, **characterized in that** the at least one receiving device forms a buffer area (17).

8. Apparatus according to any one of the preceding claims, **characterized in that** a receiving area is provided in a measuring area (10a) and/or **in that** the at least one conveying device (30a, 30b) extends over at least one measuring area (10a) and/or at least one processing area (10b).

9. Apparatus according to any one of the preceding claims, **characterized in that** at least one measuring area (10a) and at least one processing area (10b) are separated from each other by a partition wall (11).

10. Apparatus according to claim 9, **characterized in that** at least one conveying device (30a, 30b) passes through a respective opening (11a, 11b) in the partition wall (11).

11. Apparatus according to claim 10, **characterized in that** the openings (11a, 11b) are provided with doors which uncover the openings (11a, 11b) before a lens (16a, 16b, 160) transported by a conveying device (30a, 30b) passes through and close them again after passage.

12. Apparatus according to any one of the preceding claims, **characterized in that** the at least one conveying device (30a, 30b) is designed to transport the measured and aligned lenses (16a, 160) to be processed from the measuring area (10a) into the processing area (10b) of the apparatus (1, 1', 1", 1‴, 1ʺʺ) while maintaining their spatial orientation.

13. Apparatus according to any one of the preceding claims, **characterized in that** the at least one conveying device (30a, 30b) is designed as a linear conveyor (31a, 31b).

14. Apparatus according to claim 13, **characterized in that** the linear conveyor (31a, 31b) comprises a guide rail (32a, 32b) for guiding a carriage (33), the carriage (33) being movably arranged on the guide rail (32a, 32b).

15. Apparatus according to claim 14, **characterized in that** a rigid holder (34) with a first gripper or suction cup (34a) and a holder (35) pivotable about a pivot axis (S') with a second gripper or suction cup (35a) are arranged on the carriage (33), in particular wherein the first gripper or suction cup (34a) serves to receive the measured lens (16a, 160) and is designed in such a way that it can receive the lens (16a, 160), which has been measured and aligned for edge processing, in its respective alignment and that this alignment is maintained during transport of the lens (16a, 160) to the processing device (50), while the second gripper or suction cup (35a) serves to receive the finished edge-processed lens (16b).

## Revendications

1. Dispositif (1, 1', 1", 1‴, 1ʺʺ) d'usinage de lentilles, avec au moins un système de réception pour au moins une caisse de transport (13), avec au moins un système de mesure (40, 110) et au moins un système d'usinage (50),
dans lequel le dispositif (1, 1', 1", 1‴, 1ʺʺ) présente un boîtier (10), lequel est divisé sensiblement en une zone de mesure (10a) et une zone d'usinage (10b), dans lequel la zone de mesure (10a) présente l'au moins un système de mesure (40, 110) et la zone d'usinage (10b) présente l'au moins un système d'usinage (50),
dans lequel au moins un système de convoyage (30a, 30b) est prévu entre l'au moins un système de mesure (40, 110) et l'au moins un système d'usinage (50), dans lequel au moins un système de manipulation (20) est prévu entre l'au moins un système de réception, l'au moins un système de mesure (40, 110) et l'au moins un système de convoyage (30a, 30b) de telle manière que l'au moins un système de mesure (40, 110), l'au moins un système de convoyage (30a, 30b) et l'au moins un système d'usinage (50) sont disposés ou peuvent être disposés les uns par rapport aux autres en un nombre quelconque et/ou dans une orientation quelconque, et
dans lequel le transfert de lentilles à usiner (16a, 160) est effectué depuis leurs caisses de transport (13) dans un système de mesure (40, 110) pouvant être choisi librement, depuis le système de mesure (40, 110) sur un système de convoyage (30a, 30b) pouvant être choisi librement, ainsi que le transfert de lentilles déjà usinées (16b) est effectué depuis le système de convoyage (30a, 30b) respectif pour revenir dans leurs caisses de transport (13) par l'intermédiaire du système de manipulation (20).

2. Dispositif selon la revendication 1, **caractérisé en ce qu'**au moins deux systèmes d'usinage (50) sont prévus.

3. Dispositif selon la revendication 1 ou 2, **caractérisé en ce qu'**au moins deux systèmes de mesure (40, 110) sont prévus.

4. Dispositif selon l'une quelconque des revendications précédentes, **caractérisé en ce que** des systèmes de mesure (40, 110) à structure identique et/ou des systèmes d'usinage (50) à structure identique sont prévus.

5. Dispositif selon l'une quelconque des revendications précédentes, **caractérisé en ce que** l'au moins un système de mesure (40, 110) est réalisé pour la mesure sans contact par déflectométrie, par rayonnement de transmission et/ou par rayonnement de luminescence.

6. Dispositif selon l'une quelconque des revendications précédentes, **caractérisé en ce que** le système de manipulation (20) présente une première unité de manipulation (20a) pour le transfert des lentilles (16a, 160) depuis au moins une caisse de transport (13) dans l'au moins un système de mesure (40, 110) et depuis l'au moins un système de convoyage (30a, 30b) dans l'au moins une caisse de transport (13), et/ou que le système de manipulation (20) présente une deuxième unité de manipulation (20b) pour le transfert des lentilles (16a, 160) depuis l'au moins un système de mesure (40, 110) vers l'au moins un système de convoyage (30a, 30b).

7. Dispositif selon l'une quelconque des revendications précédentes, **caractérisé en ce que** l'au moins un système de réception forme une zone tampon (17).

8. Dispositif selon l'une quelconque des revendications précédentes, **caractérisé en ce qu'**une zone de réception est prévue dans une zone de mesure (10a), et/ou que l'au moins un système de convoyage (30a, 30b) s'étend sur au moins une zone de mesure (10a) et/ou au moins une zone d'usinage (10b).

9. Dispositif selon l'une quelconque des revendications précédentes, **caractérisé en ce qu'**au moins une zone de mesure (10a) et au moins une zone d'usinage (10b) sont délimitées l'une de l'autre par une paroi de séparation (11).

10. Dispositif selon la revendication 9, **caractérisé en ce qu'**au moins un système de convoyage (30a, 30b) traverse respectivement une ouverture (11a, 11b) dans la paroi de séparation (11).

11. Dispositif selon la revendication 10, **caractérisé en ce que** les ouvertures (11a, 11b) sont pourvues de portes, qui dégagent les ouvertures (11a, 11b) avant le passage d'une lentille (16a, 16b, 160) transportée par un système de convoyage (30a, 30b) et les referment après le passage.

12. Dispositif selon l'une quelconque des revendications précédentes, **caractérisé en ce que** l'au moins un système de convoyage (30a, 30b) est réalisé pour transporter les lentilles à usiner (16a, 160) mesurées et alignées en conservant leur orientation spatiale depuis la zone de mesure (10a) dans la zone d'usinage (10b) du dispositif (1, 1', 1", 1‴, 1ʺʺ).

13. Dispositif selon l'une quelconque des revendications précédentes, **caractérisé en ce que** l'au moins un système de convoyage (30a, 30b) est réalisé en tant qu'un convoyeur linéaire (31a, 31b).

14. Dispositif selon la revendication 13, **caractérisé en ce que** le convoyeur linéaire (31a, 31b) présente un rail de guidage (32a, 32b) destiné à guider un chariot (33), dans lequel le chariot (33) est disposé de manière à pouvoir être déplacé sur le rail de guidage (32a, 32b).

15. Dispositif selon la revendication 14, **caractérisé en ce qu'**une fixation rigide (34) avec un premier système de préhension ou un système d'aspiration (34a) et une fixation pouvant pivoter (35) autour d'un axe de pivotement (S') avec un deuxième système de préhension ou système d'aspiration (35a) sont disposées sur le chariot (33), en particulier dans lequel le premier système de préhension ou le système d'aspiration (34a) sert à la réception de la lentille (16a, 160) mesurée et alignée pour l'usinage de bord et est exécuté de telle manière qu'il peut recevoir la lentille (16a, 160) déjà mesurée et alignée pour l'usinage de bord dans son alignement respectif et que cet alignement reste maintenu pendant le transport de la lentille (16a, 160) vers le système d'usinage (50), tandis que le deuxième système de préhension ou système d'aspiration (35a) sert à la réception de la lentille déjà usinée su
